# EUROPEAN PATENT SPECIFICATION

(11) **EP 4 362 341 B1**
(45) Date of publication and mention of the grant of the patent: **04.11.2026**
(21) Application number: 22204697.1
(22) Date of filing: 31.10.2022
(51) Int. Cl.: H04B 7/0413, H04L 25/03, H04L 25/06

(54) **METHODS AND DEVICES TO ESTIMATE TRANSMIT SYMBOLS ACCORDING TO A PERFORMED SEARCH WITH ADAPTIVE PRUNING**
VERFAHREN UND VORRICHTUNGEN ZUR SCHÄTZUNG VON SENDESYMBOLEN GEMÄSS EINER DURCHGEFÜHRTEN SUCHE MIT ADAPTIVEM BESCHNEIDEN
PROCÉDÉS ET DISPOSITIFS POUR ESTIMER DES SYMBOLES DE TRANSMISSION SELON UNE RECHERCHE EFFECTUÉE AVEC UN ÉLAGAGE ADAPTATIF

(43) Date of publication of application: 01.05.2024
(73) Proprietor: INTEL Corporation, Santa Clara, CA 95054 (US)
(72) Inventor: CHAUTRU, Nic, Santa Clara (US); WHINNETT, Nicholas, Bath, BA1 7BA (GB)
(74) Representative: Viering, Jentschura & Partner mbB Patent- und Rechtsanwälte

(56) References cited:
- WO-A1-2022/212989
- US-A1- 2007 286 313
- US-A1- 2020 322 190

## Description

### Technical Field

This disclosure generally relates to methods and devices for estimation of transmit symbols according to a performed search with adaptive pruning.

### Background

In mobile radio communication networks in accordance with many mobile radio communication technologies, such as Fourth Generation (LTE) and Fifth Generation (5G) New Radio (NR), and with the adoption of multiple-input, multiple-output (MIMO), multiuser MIMO, and massive MIMO technologies, various methods, such as minimum mean-square error decoding methods or maximum likelihood decoding methods, are being used to estimate symbols transmitted by a transmitting entity based on a received MIMO communication signal.

One of maximum likelihood decoding methods may include suboptimal maximum likelihood decoding, in which likelihood metrics are not calculated for all possible symbol values. A processor may employ a tree search algorithm in which calculations associated with some candidate symbol values are pruned to reduce number of likelihood metric calculations. It may be desirable to provide a processor which may apply pruning adaptively based on various aspects of the mobile communication network.

WO 2022212989 A1 describes configuring a search space size for a demodulator to use in generating LLRs in demodulating received signals. In an aspect, an indication of a search space size for a demodulator to use in generating LLRs can be received from a base station, and a demodulation of one or more signals received in wireless communication can be performed by a node using the demodulator and based on the search space size. In another aspect, a search space size for the demodulator of the node to use in generating log likelihood ratios (LLRs) can be determined based on one or more signals transmitted by the node, and an indication of a search space size can be transmitted to the node.

US 2007286313 A1 discloses a method and system for detecting and decoding multiple signals. A low-complexity MIMO detector that combines sphere decoding and m-algorithm approaches, while accounting for the effect of channel condition on the decoding operation, is provided. Taking into account the channel condition effectively controls the size of the search tree, and consequently the search complexity, in an adaptive manner. The channel condition is exploited in the construction of the tree to manage the number of branches in the tree and to avoid undesirable growth.

US 2020322190 A1 discloses a method of detecting a symbol transmitted over a communication channel in a multiple input-multiple output communication system. The method includes receiving a plurality of symbols transmitted over a communication channel of a multiple input-multiple output communication system. A sphere radius is initialized based on attributes of the communication channel. A first matrix of possible transmitted signals is defined as well as a second matrix of received symbols. The matrix of possible transmitted signals is searched using a breadth-first search (BFS). Each level of the search tree is analyzed utilizing matrix multiplication to determine selected symbols satisfying the initialized sphere radius. A maximum likelihood solution is of the transmitted symbols is derived based on the selected symbols.

The present invention is defined by the appended independent claims. Specific embodiments are defined in the dependent claims.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary radio communication network;
FIG. 2 shows an exemplary internal configuration of a communication device;
FIG. 3 shows an exemplary illustration of a tree view associated with tree search algorithm;
FIG. 4A and 4B show exemplary illustrations of a tree view associated with a tree search algorithm performed based on different search spaces;
FIG. 5 shows an example of an apparatus for a communication device in accordance with various aspects provided herein;
FIG. 6 shows an exemplary illustration of a processing circuity in accordance with various aspects of this disclosure;
FIG. 7 shows an exemplary illustration of a time diagram;
FIG. 8 shows an exemplary illustration of a procedure to determine parameters for tasks in a task pool in accordance with various aspects provided in this disclosure;
FIGs. 9A, 9B, 9C, and 9D show exemplary illustrations of allocation of processing units based on four different determined parameters respectively;
FIG. 10 shows a graph exemplarily illustrating communication performance vs processing performance corresponding to different determined parameters of a performed simulation;
FIG. 11 shows an exemplary illustration to configure a processing circuitry configured to provide a service in a mobile communication network;
FIG. 12 shows an example of a method.

### Description

The following detailed description refers to the accompanying drawings that show, by way of illustration, exemplary details and aspects in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in a plural form that does not expressly state "plurality" or "multiple" likewise refers to a quantity equal to or greater than one.

Any vector and/or matrix notation utilized herein is exemplary in nature and is employed solely for purposes of explanation. Accordingly, the apparatuses and methods of this disclosure accompanied by vector and/or matrix notation are not limited to being implemented solely using vectors and/or matrices, and the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3 GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("I2V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception are handled by radio-layer components such as RF transceivers and antennas, and the logical transmission and reception over the software-level connection is performed by the processors or controllers. The term "communicate" encompasses one or both transmitting and receiving, i.e. unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations. The term "channel state information" is used herein to refer generally to the wireless channel for wireless transmission between one or more transmitting antennas and one or more receiving antennas and may take into account any factors that affect a wireless transmission such as, but not limited to, path loss, interference, and/or blockage.

An antenna port may be understood as a logical concept representing a specific channel or associated with a specific channel. An antenna port may be understood as a logical structure associated with a respective channel (e.g., a respective channel between a user equipment and a base station). Illustratively, symbols (e.g., OFDM symbols) transmitted over an antenna port (e.g., over a first channel) may be subject to different propagation conditions with respect to other symbols transmitted over another antenna port (e.g., over a second channel).

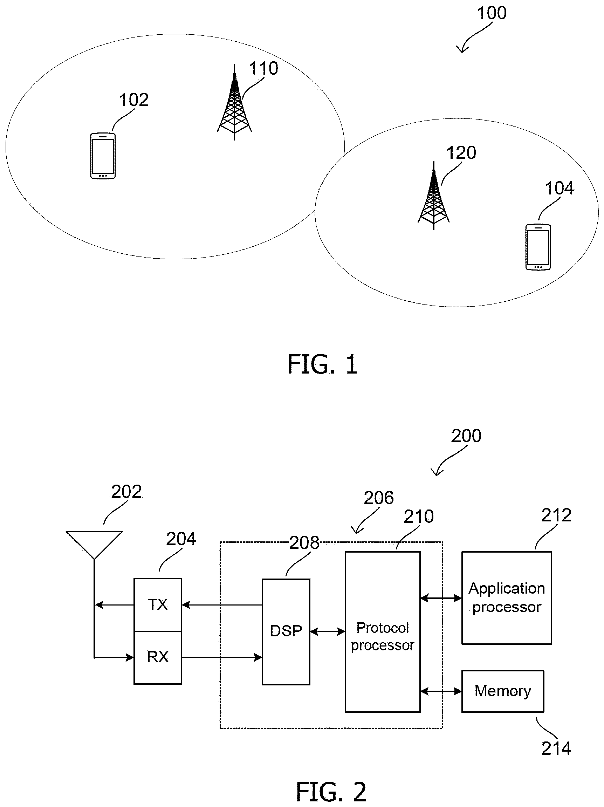

FIGs. 1 and 2 depict a general network and device architecture for wireless communications. In particular, FIG. 1 shows exemplary radio communication network 100 according to some aspects, which may include terminal devices 102 and 104 and network access nodes 110 and 120. Radio communication network 100 may communicate with terminal devices 102 and 104 via network access nodes 110 and 120 over a radio access network. Although certain examples described herein may refer to a particular radio access network context (e.g., LTE, UMTS, GSM, other 3rd Generation Partnership Project (3GPP) networks, WLAN/WiFi, Bluetooth, 5G NR, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device according to various aspects provided in this disclosure. The communication device may include various aspects of network access nodes 110, 120 or various aspects of a terminal device 102 as well. The communication device 200 may include antenna system 202, radio frequency (RF) transceiver 204, baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU, and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

Many emerging communication technologies that may be employed by a network access node or a terminal device include multiple input multiple output (MIMO) communication to improve data rates and signal to noise ratio (SNR). MIMO communication includes using multiple transmit and receive antennas to increase spectral efficiency of the radio communication channel. A problem associated with MIMO communication is MIMO detection including detecting symbols transmitted in a MIMO communication system, which may become more complex as the number of antennas and the diversity (i.e. spatial diversity, user diversity) increase. There are various detection methods, such as maximum likelihood detection (MLD), sphere decoding (SD), V-BLAST, zero forcing (ZF), minimum mean-square error (MMSE), and successive interference cancellation, some of which rely on MIMO detection via iterative algorithms (iterative MIMO detection).

MIMO techniques include beamforming, transmit (Tx) and receive (Rx) diversity, and spatial multiplexing. Beamforming may include steering the beams, based on communication channel attributes, towards the direction of the receiver, thereby amplifying the communication signal received by the receiver. Tx and Rx diversity may introduce redundancy via transmission of the same data on multiple antennas and combining received signals at the receiver to increase robustness. Spatial multiplexing may include performing transmissions via communication channels that are separated in space, which may result in increasing the channel throughput.

The reception of MIMO radio communication signals (e.g. uplink MIMO radio communication signals at a base station (BS)) may require a step of equalization, whereby the multiple transmission layers which have been transmitted through different radio communication channels, but which occupy the same radio resource (in time and frequency), may be separated and demodulated. Multiple equalization methods exist. A commonly adopted approach relies on minimum mean squared error (MMSE) equalization followed by a demapping step for demodulation, the output of which are log-likelihood ratios (LLRs), which are then further processed prior to input to a decoder. Under certain conditions (for example high correlation between the channel conditions between the multiple layers, and/or number of layers approaching the number of base station antennas), the performance of the MMSE-based approaches may degrade, and in these cases MLD may offer better performance.

A mathematical baseband signal model for the radio communication may be represented with the formula y=Hs+n. In this formula, y may denote the vector of radio communication signals sampled at the receiver (i.e. receive symbols), the vector having a size based on the number of Rx antennas (Nᵣ); s may denote the vector of symbols that was transmitted by the transmitter (i.e. transmit symbols), the vector having a size based on the number of Tx antennas (Nₜ); H may denote channel matrix (i.e. channel impulse response matrix) associated with the communication channel between each of the Tx antennas and the Rx antennas respectively, the channel matrix having a size based on both the Nᵣ and Nₜ (i.e. a channel matrix of Nᵣ x Nₜ), and n being a vector representing the interference and/or noise (e.g. a vector having a size based on Nᵣ representative of an additive Gaussian noise with zero mean and Nₒ variance). Iterative MIMO detection may include a detection of the vector s representing the symbols transmitted by the transmitter by performing multiple iterations. An exemplary iterative MIMO detection may include MLD.

In MLD, the receiver may estimate the vector s by solving the equation ${{S}_{ML}}^{˜} = argmin {\left‖y-Hs\right‖}^{2}$ . Assuming a single input single output (SISO) communication, y being the signal sampled at the receiver, s being the symbol transmitted by the transmitter, and H being the channel response of the communication channel between the transmitter and the receiver (i.e. between respective antennas), the receiver may perform evaluation to identify the symbol s from all possible symbol set S, which minimizes the ∥*y - Hs*∥ . Exemplarily, for a 64 quadrature amplitude modulation (QAM), all possible symbol set S includes 64 symbol values, and each calculation may correspond to a likelihood metric associated with a respective symbol value representative of the likelihood of the respective symbol value being the transmit symbol.

In an exhaustive search, a processor may calculate the equation for all 64 symbol values to find the symbol value that returns the minimum value. It is also to be seen that in MIMO communication, the number of calculations increase, such that in a 2x2 MIMO configuration, s becoming a vector with a size 2, all possible symbol set associated with the vector s may include 64*64=4096 symbol values, which may correspond to the need of calculations 4096 likelihood metrics, each for one of the symbol values. In a 4x4 MIMO configuration, the symbol set may reach to more than 16.7 million possible symbol values for the vector s.

Instead of performing calculations for every possibly symbol values, the receiver may opt for reducing the complexity in order to estimate the symbol transmitted by the transmitter. One of the common algorithms that rely on execution of a set of instructions repeatedly in order to find proper values includes a tree search algorithm. A tree search algorithm within this context may correspond to the estimation of the symbols transmitted by the transmitter by searching for the best path in a tree. For MLD, a receiver may employ a tree-search strategy (TS) in order to find the most likely set of modulation symbols transmitted over the MIMO channel, which corresponds to the set of modulation symbols minimizing the Euclidean distance between the received set of samples and a reconstructed version based on the hypothesized set of modulation symbols. Computational complexity can be reduced by limiting the size of the tree to be searched, which is termed as "pruning", but even so with larger numbers of layers and higher modulation orders the tree-search may still be high, which may preclude software implementations.

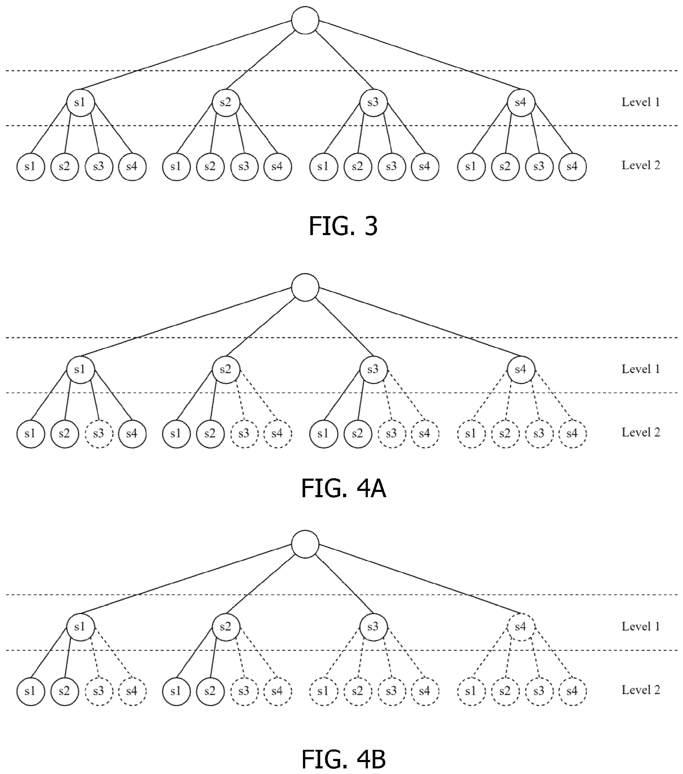

FIG. 3 shows an exemplary illustration of a tree view associated with tree search algorithm. The illustrated tree view may represent a search tree associated with symbol detection of 2x2 MIMO transmission using 4QAM (or quadrature phase shift keying (QPSK)). Accordingly, the tree includes two levels to model 2x2 MIMO transmission (i.e. s vector set being s=[sᵢ, sⱼ]), and each level is associated with possible symbols of the symbol set (i.e. four symbols for 4QAM being symbol set S={s₁, s₂, s₃, s₄}). For this purpose, each level may include nodes representative of possible symbols of the symbol set, and a node having a connection for a previous layer and a connection for a following layer may be referred to as a branch, while a node having only one connection to a previous or a following layer may be referred to as a leaf. According to this illustrative example, the receiver may detect the symbols by finding two symbols that minimize the objective function. In other words, the tree search algorithm may include finding the path in the tree that may lead to the best objective function. The tree search algorithm may include computing an objective function for each combination of nodes in the tree for each path, and then select the best path based on the computed objective function for all nodes for each path, which may correspond to the above-mentioned ML estimation.

Considering the channel matrix H may be decomposed to H=QR, Q being a unitary matrix and R being an upper triangular matrix, which may result in reducing the computation overhead, the above-mentioned equation associated with the MLD may become ∥*y - Hs*∥ = ∥*ỹ - Rs*∥; ${y}^{˜} ≜ {Q}^{H} y$; *Q^{H}* being hermetian of Q. Due to R being an upper triangular matrix, the objective function may become ${\left‖{y}^{˜}-Rs\right‖}^{2} = {\sum }_{k = 1}^{n} d {\left(k\right)}^{2} ; d \left(k\right) ≜ {y}^{˜} \left(k\right) - \left(Rx\right) \left(k\right)$ *,* (Rx)(k) denoting the k-th coefficient of the product Rx, and *k* ∈ {1,2..., *N*}. Considering, the triangularity of R, d(k) becomes: $d \left(k\right) = {y}^{˜} \left(k\right) - {\sum }_{j = k}^{n} R \left(k, j\right) s \left(j\right)$ ; *k* ∈ {1,2*..., N*}*.* Accordingly, a tree search algorithm may employ estimations associated with the objective function and d(k) while the symbol vector is built for all symbols. The Euclidean distance of the symbol vector may accordingly be reduced to the combination of partial Euclidean distances, as likelihood metrics, which may define or represent a metric for that particular symbol candidate.

A tree search algorithm may search for the best node without trying every node by employing a search tree of which the search space associated with the search is reduced from all possible symbol values for each layer to only one or more symbol values of the all possible symbol values. There are various search methods to implement such a tree search algorithm, including depth-first search, breadth-first search, and best-first search. A tree search algorithm may be configured to reduce the size of the search space (i.e. pruning) by removing sections (e.g. nodes, paths, branches) of the tree to reduce computation overhead and/or complexity of a determiner associated with the output of the search. A larger tree may result in calculations for a larger subset hence increase the computation overhead, while a smaller tree may reduce the accuracy of the estimation. Therefore, it may be desirable to tune a tree search algorithm based on a tuning parameter that may represent the amount of the pruning to be applied by the algorithm (i.e. the size of the tree to be searched), as a criterion for the pruning procedure. In other words, such a tuning parameter may define the size of the search space associated with the configured tree search algorithm, such that, for example, a first tuning parameter value may define a larger search space, so that lesser pruning is applied by the tree search algorithm, while a second tuning parameter value may define a search space that smaller than a search space defined by the first tuning parameter, so that more pruning is applied by the tree search algorithm.

A tree search algorithm may limit the size of the search space to be searched by various methods, and the skilled person would recognize that, although it may also be possible to perform the search with a predefined search space including only some of candidate symbol values, a tree search algorithm may iteratively or recursively include candidate symbol values to a search space (e.g. pooled search), or remove candidate symbol values from a search space based on previous calculations for the search. Through the execution of the tree search algorithm, a processor may determine to exclude candidate symbol values from a search space, or include further candidate symbol values to a search space based on a previous calculation for a candidate symbol value during the same search. Accordingly, for each search performed for a set of receive symbols with an intention to estimate one or more sets of transmit symbols, the search space, and respectively the size of the search space may be different.

Exemplarily, a tuning parameter may include a parameter representing a minimum or a maximum number of nodes to be searched for each, some, or every level of the search tree. A tuning parameter may include a parameter representing a minimum or a maximum number of paths connecting a node of a level to further nodes of a further level. In a general extent within the context of symbol detection, for a processor configured to perform calculations according to a tree search algorithm, the processor may adjust the number of calculations to provide output according to the tree search algorithm by selecting a subset of candidate nodes for which calculations are to be performed to determine one or more outputs (e.g. symbol vectors, log likelihood ratios for a plurality of symbol vectors), wherein the number of candidate nodes within the subset is based on the tuning parameter. The selection of the subset may be made via a pruning algorithm, such as reduced error pruning, cost-complexity pruning, error-based pruning, error-complexity pruning, minimum error pruning, etc.

A tree search algorithm according to depth-first search methods, which may also include sphere decoding within the context of symbol detection, may include pruning according to a designated radius or sphere. Accordingly, a tuning parameter associated with this method may include a parameter representing the designated radius. Considering ∥*y - Hs*∥² ≤ *r*²; r being the designated radius, a tree search algorithm may remove a node and further nodes connected to that node that are in the search direction (e.g. top-down or bottom-up) from the search. Illustratively, in a top-down search associated with the search tree 300, and a processor may complete calculations for each path from a node after a previous path is selected, a processor may determine that calculated Euclidean distances (i.e. partial Euclidean distances) for nodes s3 and s4 at the first level (i.e. candidate symbol values s3 and s4) have already exceeded the designated radius r, hence the processor may prune further nodes at the second level (and further levels, if they would be present), which are connected to the nodes s3 and s4 of the first level. It can be seen that a higher SNR in the communication may allow the tree search algorithm to prune based on a smaller radius. Furthermore, the designated radius used to prune may be reduced during the calculations, for example when a better radius is obtained at a path from the root to a leaf, and for further paths.

A tree search algorithm according to breadth-first search methods, which may include exemplarily K-best algorithm, may include evaluating all selected paths from root of the tree to a leaf (e.g. all partial Euclidean distances for each symbol at a level) and selecting only a number (K) nodes from all nodes at each level, which are best candidates for next level evaluations (e.g. K number nodes having the smallest partial Euclidean distance). Hence, for this example, a tuning parameter may represent the number K for all levels, or a number K for each level.

A tree search algorithm according to best-first search methods, may include always expanding the node having the best partial Euclidean distance at all levels which was not expanded before. Starting from the root node, and by reaching the leaf (i.e. iterations for a candidate symbol vector is finalized), a processor may use the objective function for the candidate symbol vector (e.g. the Euclidean distance associated with the candidate symbol vector) as an upper-bound to prune nodes having partial Euclidean distances greater than the current upper-bound, and adjust the upper-bound if a better candidate symbol vector is found. Exemplarily, an initial upper-bound may be designated based on a tuning parameter.

Furthermore, for a symbol detector providing a soft output including LLRs, when LLRs are to be formed, it may not be sufficient to only find the most likely transmitted symbol per layer. In various examples, obtaining the next best "counter-hypothesis" may also be desirable, which may correspond to each bit position and bit value of the modulation symbol (e.g. for 64 QAM, 6 bits x 2 binary value = 12 distances). This can be accomplished by maintaining a table of minimum Euclidean distance (i.e. likelihood metrics) for each bit position and bit value for each transmission layer. A processor (e.g. a hardware accelerator) may therefore comprise one or more resources configured to evaluate the tree search by calculating distances on each path of the tree from the root to path (e.g. via "branch generation" resources), and by maintaining the minimum distances found for each bit position of each layer (e.g. via "table" resources).

FIG. 4A and 4B show exemplary illustrations of a tree view associated with a tree search algorithm performed based on different search spaces. The illustrations include, similar to FIG. 3, levels, each level corresponding to a transmit symbol of a transmit symbol transmitted by a MIMO transmitter via MIMO communication signals, and there are candidate symbol values associated with each transmit symbol. A processor may calculate likelihood metrics for one or more candidate symbols according to the search space associated with the operation of the tree search algorithm for each level. Symbols (and paths) marked with a solid line are indicative of calculations of likelihood metrics, while symbols (and paths) marked with a dashed line are indicative of pruning applied by the tree search algorithm, for which the processor may not perform a calculation. It is to be noted that the example provided herein may be considered that it aims to illustrate the effect of different search spaces caused by different tuning parameters for a tree search algorithm in a brief manner without providing complex illustrations and aspects.

Accordingly, in FIG. 4A, the processor may, based on a first received tuning parameter that is configured to configure the size of the search space, perform calculations of likelihood metrics for candidate symbol values included in a first search space, each candidate symbol value being associated with a level. In this illustrative example, the first received tuning parameter may cause the processor to perform the search according to a first search space including a first set of candidate symbol values s1, s2, s3, and s4 for level 1 corresponding to a first transmit symbol, and a second set of candidate symbol values s1, s2, and s4 for level 2 corresponding to a second transmit symbol. In an exemplary top-down approach, any other nodes representing candidate symbol values at further levels that are connected to a pruned node (dashed nodes) may also be considered as pruned and out of the search space.

The processor may calculate partial Euclidean distances for each candidate symbol value of each set based on respective receive symbol value. Furthermore, the processor may further calculate Euclidean distances for each set of candidate symbol values, each set including one of the candidate symbol values from the first set of candidate symbol values and one of the candidate symbol values from the second set of candidate symbol values for selected path calculations, selected paths referring to a path from the root of the tree to a leaf of the tree. In this illustrative example, [sᵢ, sⱼ] being a set of candidate symbol values, sᵢ representing a candidate symbol value from the first set of candidate symbol values and sⱼ representing a candidate symbol value from the second set of candidate symbol values, the processor may calculate Euclidean distances for paths [s1, s1], [s1, s2], [s1, s4], [s2, s1], [s2, s2], [s3, s1], [s3, s2]. Based on the perform calculations, the processor may estimate one or more sets of candidate symbol values as one or more estimated transmit symbol vectors.

Similar to what was discussed with respect to FIG. 4A, in FIG. 4B, the processor may, based on a second received tuning parameter that is configured to configure the size of the search space, perform calculations of likelihood metrics for candidate symbol values included in a second search space, each candidate symbol value being associated with a level. In this illustrative example, the second received tuning parameter may cause the processor to perform the search according to a second search space including a first set of candidate symbol values s1, s2, and s3 for level 1 corresponding to a first transmit symbol, and a second set of candidate symbol values s1 and s2, for level 2 corresponding to a second transmit symbol. In an exemplary top-down approach, any other nodes representing candidate symbol values at further levels that are connected to a pruned node (dashed nodes) may also be considered as pruned and out of the search space.

The processor may calculate partial Euclidean distances for each candidate symbol value of each set based on respective receive symbol value. Furthermore, the processor may further calculate Euclidean distances for each set of candidate symbol values, each set including one of the candidate symbol values from the first set of candidate symbol values and one of the candidate symbol values from the second set of candidate symbol values for path calculations. In this illustrative example, [sᵢ, sⱼ] being a set of candidate symbol values, sᵢ representing a candidate symbol value from the first set of candidate symbol values and sⱼ representing a candidate symbol value from the second set of candidate symbol values, the processor may calculate Euclidean distances for paths [s1, s1], [s1, s2], [s2, s1] and [s2, s2]. Based on the perform calculations, the processor may estimate one or more sets of candidate symbol values as one or more estimated transmit symbol vectors.

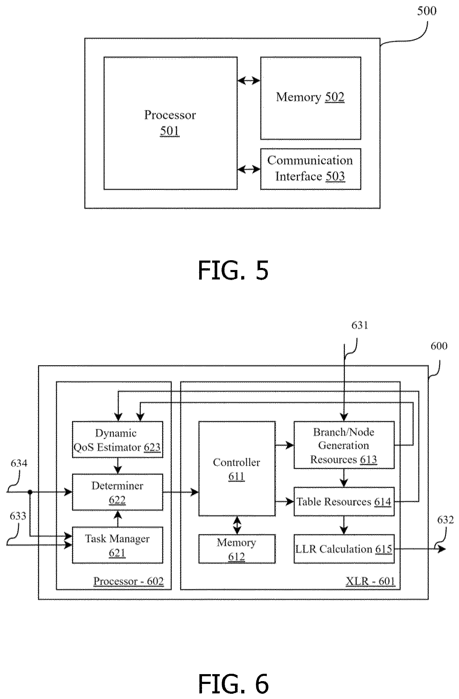

FIG. 5 shows an example of an apparatus for a communication device in accordance with various aspects provided herein. The apparatus 500 may include a processing circuitry 501 and a memory 502. The apparatus 500 may further include a communication interface 503 configured to receive symbol information, and, optionally, provide an output representative of estimated one or more sets of transmit symbols. In various examples, the apparatus 500 may be an apparatus of a radio communication device, and the communication interface may include an RF transceiver including a plurality of RF antennas, which is configured to perform MIMO communications, through which the radio communication device may receive and transmit MIMO communication signals, in particular the set of receive symbols representative of a received MIMO communication signal.

The apparatus 500 may provide a soft output representative of the estimations associated with each receive MIMO symbol set to a further baseband decoding circuit or a further processor (e.g. to a FEC decoder). In various examples, the processing circuitry 501 may further be configured to determine the set of transmit symbols for the respective received MIMO communication signal based on the estimated one or more sets of transmit symbols, and proceed with further steps of signal decoding. In various examples, the apparatus 500 may be an apparatus communicatively coupled to an entity in the radio communication network, which the entity is configured to receive and transmit MIMO communication signals. In such an example, the apparatus 500 may provide a symbol detection service based on MIMO communication signals received from the further entity, and the apparatus 500 may communicate with the further entity via the communication interface 503.

The processing circuitry 501 may include a central processing unit, a graphics processing unit, a hardware acceleration unit, a neuromorphic chip, and/or a controller. The processing circuitry 501 may be implemented in one processing unit, e.g. a system on chip (SOC), or an integrated system or chip. The processing circuitry 501 may include more than one processing unit configured to provide various aspects as mentioned herein. In various examples, a base station (BS) such as an eNB or a gNB, or a remote radio unit (e.g. O-RU) may include the apparatus 500. In various examples, a UE may include the apparatus 500. In some examples, a further entity deployed in a mobile communication network, and configured to communicate with an external radio communication device of the mobile communication network may include the apparatus. In some examples, the processing circuitry 501 may be one or more processors (e.g. application processor 212 and optionally protocol processor 210 and digital signal processor 208 as exemplarily provided with respect to FIG. 2).

The apparatus 500 may further include a memory 502 to store data. The memory 502 may store an operating system (not shown) including instructions configured to manage various operations of the processing circuitry 501, the memory 502, and the communication interface 503, and may further manage operations associated with the entity of the mobile communication network including the apparatus. The processing circuitry 501 and memory 502 (and also other various components of the apparatus) and other entities may be communicatively coupled over an internal interface to communicate with each other (e.g. a bus, wires, etc.).

The communication interface 503 may cause the apparatus 500 to communicate with further devices (e.g. UEs) or with a network access node of a mobile communication network, and accordingly the processing circuitry 501 may manage the communications with other devices for the apparatus 500. The communication interface 503 may include various components, as exemplarily provided in accordance with FIG. 2, such as antenna system 202, radio frequency (RF) transceiver 204, baseband modem 206 (including digital signal processor 208 and protocol controller 210). The communication interface 503 may include a separate application processor, and memory, or in various examples, the processing circuitry 501 and the memory 502 may provide functions of an application processor and memory for communication purposes for one or more radio communication protocols. In some aspects, the communication interface 503 may be at least configured to provide communication function with further devices according to a mobile communication protocol, such as LTE, 5G, etc. The further devices may include UEs, and/or one or more network access nodes deployed in the mobile communication network: In various examples, the further devices may include other entities deployed in the mobile communication network, which are configured to implement one or more network functions for the operation of the mobile communication network.

The processing circuitry 501 may obtain symbol information representative of a set of receive symbol (e.g..a receive symbol vector) corresponding to a received MIMO communication signal by a receiver configured to receive MIMO communication signals. In some examples, the communication interface 503 may include the receiver. In some examples, an external communication device comprising the receiver may provide the symbol information, and the apparatus 500 may receive the symbol information that is representative of a set of receive symbols via the communication interface 503. The apparatus 500 may store the received symbol information in the memory 502.

The symbol information may further include information representative of conditions of the MIMO channel (e.g. channel matrix) associated with the received MIMO communication signal. Referring to the aspects provided in accordance with FIG. 3, the channel matrix of the MIMO channel by which the MIMO communication signal is received being H, and decomposed into QR, Q being a unitary matrix and R being an upper triangular matrix, the symbol information may include *Q^{H}y*, and R; *Q^{H}* being Hermitian of Q and y being the set of receive symbols. In some examples, the processing circuitry 501 may receive information representative of channel metrics along with the set of receive symbols and obtain *Q^{H}y* and R accordingly. In some examples, the received symbol information may include *Q^{H}y,* and R.

The processing circuitry 501 may further determine a parameter (e.g. tuning parameter) representative of a size for a search space based on which the processing circuitry 501 may perform calculations to estimate at least one set of transmit symbols according to the set of receive symbol for the received MIMO communication signal. The processing circuitry 501 may determine the parameter based on various further parameters associated with the respective MIMO communication, some of which are provided as examples in this disclosure. The processing circuitry 501 may determine a parameter for each received symbol information that is representative of one set of receive symbols. The search space associated with a set of receive symbols may include one or more candidate symbol values for each receive symbol (and correspondingly for each transmit symbol).

The processing circuitry 501 may further perform a search, through which the processing circuitry 501 may calculate a plurality of likelihood metrics based on the symbol information, wherein the size of the search space of the performed search is based on the determined parameter. The processing circuitry 501 may calculate the likelihood metrics with a use of a search tree according to a tree search algorithm. The tree search algorithm may employ a depth-first search, a breadth-first search, or a best-first search, in which one or some of candidate symbol values corresponding to each transmit symbol are pruned according to the determined parameter.

The processing circuitry 501 may be configured to perform the search based on a predefined search space comprising all possible candidate symbol values for each receive symbol (and correspondingly each transmit symbol), and the processing circuitry 501 may calculate likelihood metrics for a first portion of candidate symbol values for each receive symbol, while the processing circuitry 501 may prune calculations associated with a second portion of candidate symbol values for each receive symbols. The determined parameter may define the number of candidate symbol values of the first portion of candidate symbol values for each receive symbol and/or the number of candidate symbol values of the second portion of candidate symbol values. In some aspects, a determined parameter may define varying number of candidate symbol values for different receive symbols.

The processing circuitry 501 may be configured to perform a suboptimal maximum likelihood estimation to estimate the one or more sets of transmit symbols, in which the processing circuitry 501 may perform the search to obtain the one or more sets of transmit symbols that are having best likelihoods (i.e. smallest Euclidean distances) based on the obtained symbol information. Within this context, a maximum likelihood estimation may include calculating likelihoods for all possible candidate symbol values to estimate a transmit symbol vector (including a set of transmit symbols) based on a receive symbol vector (including a set of receive symbols), and a suboptimal maximum likelihood estimation may include calculating likelihoods for only some of candidate symbol values to estimate a transmit symbol vector based on a receive symbol vector.

The processing circuitry 501 may, for at least one receive symbol represented by the symbol information, determine candidate symbol values in the search space based on the determined parameter. For example, in a K-best algorithm, a determined parameter may represent the number K for a level (i.e. corresponding to a transmit symbol for which calculations are performed based on a respective receive symbol). Accordingly, for a selected candidate symbol value (one of K-best likelihoods calculated for the level) for the level, the processing circuitry 501 may determine to include candidate symbol values in the search space (e.g. nodes of candidate symbol values for further layers that are connected to the node of the selected candidate symbol value in a tree search view), for which the processing circuitry 501 may perform calculations at a further layer. Similarly, for a not-selected candidate symbol value (not one of K-best likelihoods calculated for the level), the processing circuitry 501 may determine to exclude candidate symbol values from the search space (e.g. nodes of candidate symbol values for further layers that are connected to the node of the not-selected candidate symbol value in a tree search view) for further layers. Only this example associated with the K-best method is provided for brevity, and the skilled person would apply the understanding provided herein for other tree search methods.

Accordingly, the processing circuitry 501 may calculate a plurality of likelihood metrics based on the obtained symbol information to estimate one or more sets of transmit symbols. The processing circuitry may calculate a likelihood metric (e.g. partial Euclidean distance), based on a receive symbol, for each candidate symbol value that the processing circuitry 501 may have selected from the portion of the search space that is associated with the respective receive symbol (or with the respective transmit symbol), and the likelihood metric may represent a metric that is configured to measure a candidate symbol value being the respective transmit symbol based on the respective receive symbol.

Furthermore, the processing circuitry 501 may calculate a further likelihood metric (e.g. an Euclidean distance for a set of candidate symbol values (a path of a search tree) corresponding to an estimate of a transmit symbol vector) based on the combination of the calculated likelihood metrics. For this purpose, the processing circuitry 501 may cause the memory 502 to store information representing selected candidate symbol values and their calculated likelihood metrics during the search to calculate the further likelihood metric for a set of candidate symbols, which the further likelihood metric may represent a metric that is configured to measure a set of candidate symbol values being the set of transmit symbols based on the respective set of receive symbols.

The processing circuitry 501 may accordingly obtain, and may provide, a soft-output representative of one or more estimated sets of transmit symbols. Each estimated set of transmit symbols may represent a transmit symbol vector that the processing circuitry 501 has estimated based on the performed search according to the receive symbol vector represented by the symbol information. The soft-output may include log-likelihood ratios (LLRs) calculated for each one of the one or more estimated sets of transmit symbols based on the one or more estimated sets of transmit symbols, which may represent the likelihood of the respective estimated set of transmit symbols among the one or more estimated sets of transmit symbols according to the performed calculations. As indicated, the processing circuitry 501 may further perform other operations (e.g. FEC decoding based on received soft output) to obtain a decoded symbol vector.

In accordance with various aspects provided herein, the processing circuitry 501 may determine the parameter based on allocation information that the processing circuitry 501 may have obtained, which the allocation information is associated with a task including an estimation of one or more transmit symbols based on received symbol information including a set of receive symbols associated with a received MIMO communication signal. Based on the allocation information associated with the respective task, the processing circuitry 501 may determine the parameter.

A determined parameter may allow the processing circuitry 501 to configure the search associated with the task, and in particular, for allocation of computing resources for the particular task. In some examples, the processing circuitry 501 may be configured to perform suboptimal maximum likelihood estimation in a first mode in which the search space is larger (i.e. less pruning) than the search space associated with a second mode. In various aspects, a determined parameter may cause the processing circuitry 501 to configure the search associated with the task to perform calculations according to a plurality of search spaces greater than 2.

One simple example may be that, the processing circuitry 501 may perform a K-best search including a first mode in which K=3 and a second mode in which K=2 to estimate one or more transmit symbol vectors including 4 transmit symbols (i.e. received 4x4 MIMO communication signal). Based on the determined parameter, the processing circuitry 501 may determine to perform the K-best search according to the first mode or according to the second mode. Another example may be a sphere decoding including a first mode and a second mode, and accordingly, the processing circuitry 501 may assign a radius value that is greater than another radius value to be assigned for a second mode.

It is to be recognized that less pruning (larger search space) may result in requiring more computing resources but also relatively improved communication performance due to more accurate determination of transmit symbols and accordingly reducing packet losses/retransmissions, as the search is conceptually closer to an actual maximum likelihood decoding.

By employing the determination of the parameter based on allocation information associated with the task, the processing circuitry 501 may allow a tradeoff between the throughput associated with the search, in particular associated with the usage of computing resources including the time required to perform the search, and the performance of MIMO communication. Exemplarily, the processing circuitry 501 may configure each search associated with a MIMO communication signal based on the transmitting entity of the MIMO communication signal (e.g. a UE transmitting uplink MIMO communication signals).

Furthermore, the processing circuitry 501 may perform the search adaptively, in which the processing circuitry 501 may cause the search to be performed according to various conditions depending on the use case. Some MIMO communication channels may be in a condition, in terms of channel quality, to perform the search with fewer computing resources, while an assignment of more computing resources may be desirable for some MIMO communication channels that are in lesser conditions.

Furthermore, considering a task pool including a plurality of tasks including estimation of transmit symbols based on receive symbols, it may be desirable to maintain the overall throughput of the apparatus 500. By causing the search to be performed with the use of varying search space for each task, the processing circuitry 501 may manage a pooled solution in consideration of flexible throughput capacity dynamically in order to maintain the metrics associated with computation overhead, such as latency, to perform processing also for a plurality of entities of a mobile communication network, by which the processing circuitry 501 may adapt different preferences or constraints associated with different network slices or virtual functions of mobile communication network, mobile network operators, or other radio access network vendors.

Furthermore, the processing circuitry 501 may adapt the pruning for a dynamic tradeoff between the throughput associated with the search in terms of the usage of computing resources and the MIMO communication performance for a task within the task pool based on further allocation information provided for other tasks in the task pool, in particular by taking account of different radio communication performance metrics or processing performance metrics, which may collectively be referred to as quality of service (QoS) for the respective task within this disclosure.

In some aspects, allocation information, which is associated with obtained symbol information, may include a communication performance metric. The communication performance metric may include any kind of measure that may indicate, or represent, the performance of radio communication between the transmitting entity of the respective MIMO communication signal and the receiving entity of the respective MIMO communication signal, which may include a metric that is associated with at least one of a packet loss, a bit rate, data throughput, etc. In some examples, the communication performance metric may include a designated communication performance metric (e.g. designated by an orchestrating entity of the mobile communication network). In some examples, the processing circuitry 501 may estimate the communication performance metric based on previous communications performed between the transmitting entity and the receiving entity.

For example, the processing circuitry 501 may cause the memory 502 to store LLRs calculated for MIMO communication signals between the transmitting entity and the receiving entity. Based on previously calculated LLRs for the same MIMO communication channel between the transmitting entity and the receiving entity, the processing circuitry 501 may determine the parameter. For example, the processing circuitry 501 may determine the parameter heuristically based on previously calculated LLRs to provide a designated QoS for a search to be performed for a received symbol information for the MIMO communication channel.

For example, the processing circuitry 501 may determine to allocate more computing resources for the search to be performed for the MIMO communication channel if previously calculated LLRs, or in case estimated communication performance metrics overall, represent a decrease in the QoS. Similarly, the processing circuitry 501 may determine to allocate fewer computing resources for the search to be performed based on previously calculated LLRs, or estimated communication performance metrics for the MIMO communication channel.

In some aspects, allocation information, which is associated with obtained symbol information, may include a processing performance metric. The processing performance metric may include any kind of measure that may indicate, or represent, the computing performance associated with a search including a plurality of calculations according to a search space to estimate the one or more sets of transmit symbols based on one or more MIMO communication signals received via a MIMO communication channel, and in particular one or more searches that the processing circuitry 501 had performed for one or more previously received MIMO communication signals respectively, which the MIMO communication signals are received using the same MIMO communication channel. A processing performance metric may exemplarily include time information representative of elapsed processing time to perform the one or more previous searches respectively. A processing metric may alternatively, or additionally, include the number of iterations (or recursions) that the processing circuitry 501 had performed to perform the one or more searches respectively.

For example, the processing circuitry 501 may cause the memory 502 to store elapsed time and/or the number of iterations (or recursions) for one or more searches for MIMO communication signals. Based on stored elapsed time and/or the number of iterations (or recursions) for the same MIMO communication channel between the transmitting entity and the receiving entity, the processing circuitry 501 may determine the parameter. For example, the processing circuitry 501 may determine to allocate more or fewer computing resources than one or more previous searches for a search to be performed for the MIMO communication channel based on the stored information in the memory 502.

In some aspects, allocation information, which is associated with obtained symbol information, may include information associated with the transmitting entity (e.g. a UE) that has transmitted the received MIMO communication signal which the symbol information represents. In particular, when the processing circuitry may determine parameters for different transmitting entities and additionally, or alternatively, for various attributes associated with the transmitting entity, it may be desirable to determine parameters independently. For this purpose, the memory 502 may store information that is representative of a mapping between the information associated with the transmitting entity and the parameter itself, or further additional parameters that the processing circuitry 501 may determine the parameter defining the search space based on additional parameters associated with the transmitting entity.

For example, in a scenario in which the apparatus 500 is configured to provide a service to estimate transmit symbols for a plurality of transmitting entities, the information associated with the transmitting entity may include an identifier for the transmitting entity (e.g. a UE identifier). The memory 502 may store mapping information including a plurality of identifiers for a plurality of transmitting entities and one or more additional parameters for each transmitting entity. Based on the obtained symbol information and the allocation information associated with the respective symbol information, which the allocation information may include an identifier for the respective transmitting entity that has transmitted the transmit symbols indicated by the symbol information, the processing circuitry 501 may determine the parameter defining the search space for the search to be performed based on respective one or more additional parameters stored in the memory 502 indicated by the respective identifier.

In some examples, an additional parameter may include any type of parameter that the processing circuitry 501 may use to determine the parameter associated with the search space to search for transmit symbols for a transmitting entity. For example, an additional parameter may represent a priority associated for the respective transmitting entity. An additional parameter may represent a preference associated for performing the calculations, in particular a preference of a communication performance over a computing performance, or a preference of a computing performance over a communication performance.

For example, an additional parameter for a first transmitting entity may represent a preference of a communication performance over a computing performance, and an additional parameter for a second transmitting entity may represent a preference of a computing performance over a communication performance. Accordingly, the processing circuitry 501 may determine a first parameter for the first transmitting entity based on the additional parameter for the first transmitting entity, and the processing circuitry 501 may determine a second parameter for the second transmitting entity based on the additional parameter for the second transmitting entity. The first parameter may cause the search space to be larger than the search space that the second parameter causes (under assumption that all other effective parameters associated with defining the search space are the same).

Considering an implementation of mobile communication network, the mobile communication network includes a physical network infrastructure configured to provide various services via virtualized and independent logical networks through use of various network functions that are multiplexable based on a respective use scenario with an intention to provide a better network flexibility. Using software defined networks and network function virtualization technologies, the mobile communication network may include the network functions to establish logical networks to meet specific needs of service consumers/service providers to perform communication.

Within this context, entities may perform communication within the mobile communication network via use of network slices, in which each network slice may define an independent and logical end-to-end network in a flexible manner, by which the data transports based on various network parameters that may be specific to the use case or the communicating entities (e.g. UE). Network entities between the end-to-end network may configure themselves based on the network parameters associated with the respective network slice through which, for example, a network entity at one end receives a particular service. Each transmitting entity may be associated with one or more network slices. For example, a provisioning entity within the mobile communication network (e.g. Unified Data Management, UDM in 5G/NR) may assign one or more network slices to a UE in response to a request received from the UE, and a UE may request one or more network slices according to various type of requirements in terms of services used by the UE.

In some examples, an additional parameter associated with the respective transmitting entity that has been stored in the memory 502 may include one or more attributes of the network slice associated with the transmitting entity, and in particular, MIMO communication signal transmitted by the transmitting entity. The one or more attributes may include a network slice identifier (e.g. a single network slice selection assistance information (S-NSSAI), or a network slice election assistance information (NSSAI)) representing the network slice associated with the transmitting entity or the respective MIMO transmission. The transmitting entity may have previously signaled the S-NSSAI associated with the respective MIMO transmission. In some examples, an attribute may include a slice/service type (e.g. a value representing whether a respective service associated with the MIMI transmission is enhanced Mobile Broadband (eMBB), ultra reliable low latency communications (URLLC), or massive machine type communications (mMTC) service). In some examples, an attribute may include a slice differentiator representative of information to provide indication for the respective service. In some examples, an attribute may also include a QoS requirement or a QoS preference associated with the respective network slice. In some examples, an attribute may include a configuration parameter configured by a mobile network operator, which the configuration parameter indicates a resource allocation (in terms of communication resources and/or computation resources) associated with the respective network slice, optionally relative to other network slices of the mobile communication network.

Accordingly, the memory 502 may further store network slice information associated with a plurality of transmitting entities, and each network slice information may include the above-mentioned one or more attributes associated with a respective network slice for a respective transmitting entity. Based on the obtained allocation information including an identifier for the transmitting entity, the processing circuitry 501 may determine a parameter to estimate a set of transmit symbols sent by one of the transmitting entities according to the stored network slice information associated with the respective transmitting entity.

In some examples, any exemplary additional parameter mentioned herein in accordance with the examples in which additional parameters are stored in the memory 502, the apparatus 500 may have received allocation information for each respective task of estimating a transmit symbol vector based on a received symbol vector including the additional parameter from a further entity in the mobile communication network, such as an orchestrating entity of the mobile communication network. In such examples, the obtained allocation information itself may include at least one of, or any combination of, one or more attributes associated with the respective network slice, or a priority parameter representative of an assigned priority for the respective symbol information, a received preference information representative of a preference of an allocation performance for the respective symbol information, such as a preference of a computing performance over a communication performance or a preference of a communication performance over a computing performance, a QoS preference, etc.

FIG. 6 shows an exemplary illustration of a processing circuity in accordance with various aspects of this disclosure. The processing circuitry 600 may be, or may include, a processing circuitry of an apparatus provided in this disclosure (e.g. the processing circuitry 501 of the apparatus). The processing circuitry may include an accelerator (e.g. an MLD accelerator) 601 and an accelerator manager 602. In some examples, the accelerator manager 602 may include any type of processing circuitry that is configured to execute one or more instructions which, if executed, cause the accelerator manager 602 to provide functions mentioned herein for the accelerator manager 602, in particular for task manager 621, determiner 622, and dynamic QoS estimator 623. In some examples, a library may include the one or more instructions, and the library may be configured to control the accelerator 601. In particular, the library may be a shim provided to operate as an interface to a further application which may be executed by an external entity in the mobile communication network.

The accelerator 601 may include a controller 611, a memory 612, node/branch generation resources 613 including circuitry to generate nodes/branches according to a tree search algorithm and perform calculations for each generated node based on a received symbol information 631, and table resources 614 including circuitry to store and maintain likelihood metrics that the node/branch generation resources 613 has calculated. The node/branch generation resources 613 and the table resources 614 are configured to perform a search configured to calculate a plurality of likelihood metrics to estimate one or more sets of transmit symbols based on the received symbol information 631. Various aspects related to the search is provided in this disclosure, for example with respect to FIG. 5. The accelerator 601 may further include an LLR calculation circuitry 615 to perform LLR calculations for the estimated one or more transmit symbols in order to provide a soft-output 632 (e.g. calculated LLRs) for each received symbol information.

The node/branch generation resources 613 and the table resources 614 may include a plurality of processing units (e.g. engines configured to process data), which the controller 611 may allocate to perform calculations and store calculations for one or more input tasks simultaneously. In some examples, the controller 611 may allocate the plurality of processing units to perform calculations for the one or more input tasks based on the determined parameter.

The received symbol information may include information representative of conditions of the MIMO channel (e.g. channel matrix) associated with the received MIMO communication signal. Referring to the aspects provided in accordance with FIG. 3, the channel matrix of the MIMO channel by which the MIMO communication signal is received being H, and decomposed into QR, Q being a unitary matrix and R being an upper triangular matrix, the symbol information may include *Q^{H}y*, and R; *Q^{H}* being hermetian of Q and y being the set of receive symbols. In some examples, the node/branch generation resources 613 may directly receive the symbol information including *Q^{H}y*, and R.

The accelerator manager 602 may include a task manager 621 configured to perform management of received input tasks 633. In some examples, the task manager 621 may manage received input tasks based on received allocation information 634. In some examples, each input task 633 may be associated with task information including allocation information associated for the respective input task. In some examples an input task may be associated with a first allocation information provided within the task information and a second allocation information that is received 634 separately from another entity (e.g. an orchestrating entity of the mobile communication network). In such an example, the allocation information associated for the task may include the first allocation information and the second allocation information.

In some aspects provided herein, it is provided that the apparatus including the processor 600 may be a device deployed within the mobile communication network, which the device is configured to provide a service to estimate transmit symbol vectors based on received symbol vectors for a plurality of other entities, such as network access nodes including base stations or remote radio units of the mobile communication network. In such examples, an application executed by a processor of the device may provide input tasks and task information associated with the input tasks according to the exchange of information with the respective network access nodes. In such examples, task information may further include an information associated with the respective network access node, such as an identifier for the network access node. Furthermore, the device may communicate with an orchestration entity of the mobile communication network to receive allocation information that may represent various configuration profiles, in particular, which may be associated with one or more attributes of the respective network slice associated with an input task.

The task manager 621 may include a memory, and the task manager 621 may cause the memory to store task information for each received input task of a plurality of input tasks in a task pool. Each received input task may represent a task of an estimation of transmit symbol vectors for a received MIMO communication signal transmitted by a transmitting entity and received by a receiving entity, which a respective symbol information associated with the respective input task may represent a receive symbol vector for the received MIMO communication signal.

The management of received input tasks 633 may include management of task queues in the task pool, such as task scheduling. The task manager 621 may include a plurality of input tasks within the task pool that are queued to be processed by the accelerator 601, and the task manager 621 may schedule each received input task based the allocation information associated with the respective input task. Furthermore, the task manager 621 may move tasks within the queue associated with the task pool based on the allocation information for the respective input task and optionally based on allocation information for other input tasks that in the queue. For example, for a received input task of which the respective allocation information is representative of a priority among other tasks in the task pool, the task manager 621 may schedule the received input task before, or instead of, scheduled tasks in the task pool. The task manager 621 may perform any type of task management operation to manage the processing queue associated with the task pool to manage the tasks based on the allocation information associated with received input tasks within the task pool. In one illustrative example, the task manager 621 may manage the tasks based on priority information associated with each input task.

The skilled person may recognize that the task management operation may further include a kind of a synchronization with an entity that is configured to provide the symbol information to the accelerator 601. Accordingly, the task manager 621 may further communicate with the entity that is configured to provide symbol information for tasks to the accelerator 601 to cause the respective entity to provide symbol information in synchronization with the processing queue. In some examples, the accelerator 601 (e.g. the controller 611) may be configured to fetch symbol information from an external memory for each task that is indicated to the accelerator by the accelerator manager 602. In such an example, the task manager 621 may provide information including an identifier for each indicated task (e.g. a task descriptor), and the accelerator 601 may fetch respective symbol information from the external memory based on the identifier associated with the indicated task.

The accelerator manager 602 may further include a determiner 622. The determiner 622 may be configured to determine a parameter that is representative of a size for a search space. Various aspects associated with the determination of the parameter has been provided in this disclosure, for example with respect to FIG. 5. For each received input task, the determiner 622 may determine a parameter based on the allocation information associated with the respective received input task and provide information indicating the determined parameter to the controller 611 of the accelerator 601, so that the controller 611 may allocate the node/branch generation resources 613 and the table resources 614 according to the determined parameter to perform the search for the respective received input task.

In some examples, for each task that the task manager 621 may provide an indication to the determiner 622, the determiner 622 may determine a parameter associated with a search space for the search indicated by the task. In some examples, the determiner 622 may receive the task information including a task identifier and allocation information associated with the indicated task, and the determiner 622 may determine the parameter for the respective task based on the allocation information associated with the indicated task. In some examples, the determiner 622 may further determine the parameter based on received allocation information 634 associated with the indicated task (e.g. the second allocation information in some aspects). In some aspects, the determiner 622 may access allocation information of one or more other tasks in the task pool, and the determiner 622 may determine the parameter based on allocation information of one or more other tasks in the task pool.

The accelerator manager 602 may further include an estimator 623 that is configured to estimate a performance metric associated with the calculation operations performed by the accelerator 601. The estimated performance metric may include any type of metric that may represent the quality of the service provided by the computation of the accelerator 601, which may include the latency, or computing overhead. The estimator 623 may receive usage information associated with the processing performance of the node/branch generation resources 613 and/or the table resources 614. Received usage information may include measurements representative of actual processing usage, a number of iterations performed by each or all of the node/branch generation resources 613 and/or the table resources 614, a time period associated with processing of a task, an estimated usage of the processing, which the controller 611 may have estimated, etc.

In some examples, the node/branch generation resources 613 and/or the table resources 614 may send the usage information periodically to the estimator 623. For example, the estimator 623 may receive the usage information at every microseconds, at every 2 microseconds, at every N microseconds, N being an integer. Based on the usage information, the estimator 623 may keep track of each task processed by the node/branch generation resources 613 and/or the table resources 614, or in particular, the originator of the respective task (e.g. a VF), or the network slice associated with the respective task.

The estimator 623 may, based on received usage information, estimate time resources and/or computing resources required to estimate one or more transmit vectors for the tasks being processed by the accelerator 601. Furthermore, the estimator 623 may access the task pool and estimate time resources and/or computing resources to be allocated for the tasks in the task pool, which are to be processed by the accelerator 601, based on the received usage information. In some examples, the estimator 623 may further receive LLR outputs for each searched task from the LLR calculation circuitry 615 to estimate output performance of the accelerator 601, according to which the estimator 623 may determine real-time performance metrics.

Accordingly, the estimator 623 may provide a real-time (or a quasi-real-time) processing performance metric, which the determiner 622 may use to determine parameters for the tasks in the task pool. In other words, the estimator 623 may adaptively, in a manner that may include an adaptation based on estimated actual usage of the node/branch generation resources 613 and/or the table resources 614 (i.e. corresponding to processing units employed to perform calculations for the tasks being processed), and/or predicted usage of the node/branch generation resources 613 and/or the table resources 614 based on allocation information associated with scheduled tasks in the task pool, provide a real-time performance metric to the determiner 622. Based on the provided real-time performance metric, the determiner 622 may determine a parameter for new input tasks received by the task pool, which the determiner 622 may determine based on provided real-time performance metric and allocation information associated with a new input task. Additionally, or alternatively, the determiner 622 may update one or more determined parameters for one or more scheduled tasks in the task pool based on the provided real-time performance metric.

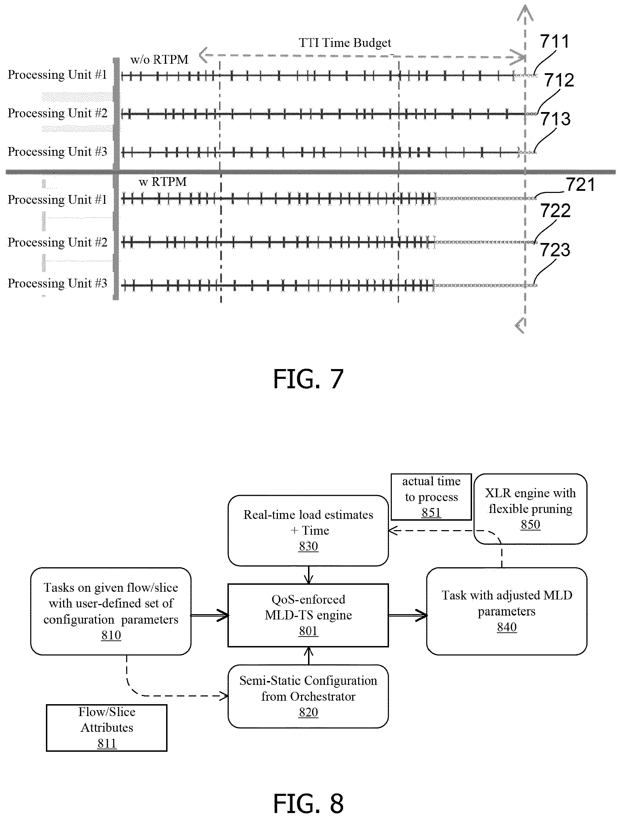

FIG. 7 shows an exemplary illustration of a time diagram associated with usage of the node/branch generation resources 613 and/or the table resources 614 to perform processing for tasks. In this illustrative example, three processing units are allocated to perform calculations for tasks. The horizontal axes may represent processing time associated with each processing unit, and each vertical bar may represent a transition from a previous task to a next task (i.e. the end of the previous task and the beginning of the next task). An estimator may have estimated a time budget for the tasks in the task pool, or the time budget may be a predefined time budget for a number of tasks.

In this illustrative example, time diagrams 711, 712, and 713 may correspond to processing time associated with a first processing unit, a second processing unit, and a third processing unit, which node/branch generation resources and/or table resources may include. The time diagrams 711, 712, 713 may further correspond to a scenario in a determiner (e.g. the determiner 622) has not received real-time performance metrics from an estimator (e.g. the estimator 623). In such a scenario, a task manager or the determiner may have removed some tasks from the task pool to finalize processing of tasks within the time budget.

In one example, time diagrams 711, 712, and 713 may also be considered to illustrate an estimation performed by the estimator based on actual usage of resources based on calculations performed by an accelerator (e.g. the accelerator 601) and/or predicted usage of resources based on scheduled tasks in a task pool.

Furthermore, time diagrams 721, 722, and 723 may correspond to processing time associated with the first processing unit, the second processing unit, and the third processing unit. The illustration may illustrate a scenario in which the determiner may receive real-time performance metrics from the estimator, and the determiner may determine parameters for tasks of which the transitions are provided in the time diagrams 721, 722, and 723 based on received real-time performance metrics. It is to be seen collectively from time diagrams 711, 712, 713 and respectively 721, 722, and 723, that the determiner has determined the parameters for the corresponding tasks in a manner that smaller search spaces are defined, so that processing time required for the tasks are shortened, which may be in an expense of communication performance.

In various examples, the estimator may have predicted processing time of a set of scheduled tasks in the task pool, which the predictions may correspond to time diagrams 711, 712, 713. Based on the prediction, the determiner may determine to adjust parameters of the set of scheduled tasks in the task pool in case the predicted processing time of the set of scheduled tasks in the task pool exceeds the time budget. The determiner may select scheduled tasks in the set based on allocation information associated with the tasks (e.g. the priority information for each task). In other words, to avoid having tasks not meeting their latency requirements, the estimator and the determiner would collectively allow some of the tasks to have more aggressive pruning (e.g. the ones with lower priority) so that overall not tasks are dropped but at the cost of reduced wireless performance for such degraded tasks.

FIG. 8 shows an exemplary illustration of a procedure to determine parameters for tasks in a task pool in accordance with various aspects provided in this disclosure. A QoS-enforced MLD-TS engine 801 may include a task manager, a determiner, and an estimator (e.g. the task manager 621, the determiner 622, and the estimator 623 respectively) to control processing units (e.g. the accelerator 601).

The engine 801 may receive 810 a plurality tasks, each task may have an originator, such as a respective network traffic flow, a respective network slice, or in particular a provider VF associated with the respective network slice. Each task may be a PHY-layer (i.e. L1) task associated with a service of estimation of transmit symbol vector for the respective originator (i.e. a service consumer). Each task may have an intended and user defined search size parameter on top of other configuration parameters. The engine 801 may keep track of that related task and its originator. The engine 801 may accordingly keep received tasks in a task pool and schedule each task with a respective parameter to allocate computing resources. In some examples, the respective parameter may be indicative of a size of the search space to be used by the processing units to perform a search for estimation of transmit symbol vectors. With its presence, the user defined search size parameter may indicate an assigned preference associated the size of the search space. In various aspects, in which resources of processing units are allocated based on a number of predefined modes, the user defined search space may indicate one of the predefined modes. The service consumer may provide one or more attributes 811 associated with the flow or the network slice, such as communication performance metrics, computation performance metrics, etc. (i.e. a first allocation information) as user-defined set of configuration parameters.

Furthermore, the engine 801 may receive 820 semi-static configuration parameters provided by an orchestrating entity of the mobile communication network as a second allocation information. The second allocation information may also include information associated with transmitting entities, priority parameters which may optionally be associated with transmitting entities, or the traffic flows/network slices, etc. In some examples, the second allocation information may be task-based, or the engine 801 may obtain allocation information associated with each received task from the semi-static configuration parameters based on task information associated with the respective task.

In some aspects, a device may include the engine 801, and a processor of the device that may execute one or more instructions, which may cause the processor to communicate with the service consumers and the orchestrating entity to obtain tasks and respective allocation information. In some examples, the processor may execute instructions associated with VFs that may be the service consumers.

Furthermore, the engine 801 may obtain real time load estimates and processing time estimates 830, as real-time performance metrics for the processing units. For this purpose, the processing units 850 which are configured to perform searches for scheduled tasks based on determined parameters (i.e. which may apply flexible pruning as provided in this disclosure) may provide actual processing time 851. Accordingly, the engine 801 may determine parameters and/or adjust determined parameters 840 for each task scheduled for the processing units to perform the search to estimate at least one transmit symbol vector for the respective task. The determination of parameters may be based on the first allocation information associated with the task (and optionally with other tasks in the task pool) received from the service consumer, and/or the second allocation information associated with the task (and optionally with other tasks in the task pool) received from the orchestrating entity, and the real-time performance metrics associated with the processing units that perform the search for the scheduled tasks.

Referring back to FIG. 6, the estimator 623 may estimate the time and/or computing resources based on the originator of each task (i.e. the entity that has established and/or provided the task). In various examples, in particular in a mobile communication network supporting NFV, different VFs may be originators of received tasks, and the task manager 621 may be configured to schedule tasks based on originators of the received tasks, such that the accelerator 601 may process one or more tasks for a plurality of originators. In some examples, originators may include network access nodes receiving respective MIMO communication signals associated with the task. It may be desirable to schedule tasks based on originators to maintain a fairness among originators which may intend to receive the service of estimation of transmit symbol vectors.

Moreover, instead of an uncontrolled effect due to number of tasks in the task pool and required processing time, it may be desirable to limit the effect of out of budget scheduling for tasks, according to which their estimated priority and QoS expectation (e.g. performance/priority metrics obtained from allocation information). In other words, affecting tasks independently and marginally (e.g. fractions of dBs in required Eb/No) time and computing resources to be allocated for a task with a lower priority or estimated to consume an unfair amount of shared resources may be reduced, while keeping the effect on a task with a higher priority based on their guaranteed bitrate or low PHY latency minimum. For one simple example, the determiner may adjust determined parameters only for tasks associated with an eMBB service, while the determiner may not adjust determined parameters for tasks associated with a URLLC service. Accordingly, processing of low priority tasks may be sped up at the cost of a wireless performance degradation.

Accordingly, the determiner 622 may provide information representing the determined parameter for each scheduled task to the controller 611, and the controller 611 may control the node/branch generation resources 613 and the table resources 614 to estimate one or more transmit symbol vectors for the scheduled task based on the determined parameter. The accelerator 601 may include a plurality of processing units as the node/branch generation resources 613 and the table resources 614, which the plurality of processing units are configured to perform the search including calculations as provided herein to estimate one or more transmit symbol vector based on received symbol vector. The controller 611 may configure the node/branch generation resources 613 and the table resources 614 based on the determined parameter. The controller 611 may further configure the search based on the determined parameter to cause the search to be performed according to a search space that is based on the determined parameter.

In some aspects, the memory 612 may store a table representative of a mapping between parameters provided by the determiner 622 and one or more parameters associated with each processing unit of the node/branch generation resources 613 and the table resources 614. The controller 611 may accordingly allocate the node/branch generation resources 613 and the table resources 614 for a scheduled task by configuring each processing unit based on the one or more parameters associated with each processing unit according to the determined parameter received from the determiner 622.

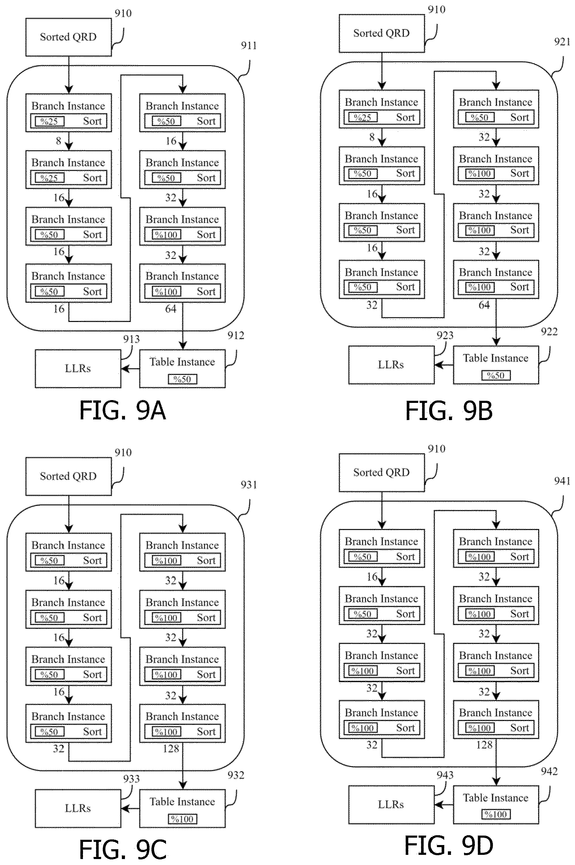

FIGs. 9A, 9B, 9C, and 9D show exemplary illustrations of allocation of processing units based on four different determined parameters respectively. The skilled person would appreciate that the exemplary allocations provided with respect to these illustrations are provided as examples to perform a search via use of a particular method, and teachings provided herein are intended to provide only an example for these aspects, which may be carried for other methods to perform a search based on a tree search algorithm.

Illustrations include node/branch generation resources 911, 921, 931, 941; table resources 912, 922, 932, 942. The node/branch generation resources 911, 921, 931, 941 may receive symbol information 910 for a respective task, a sorted QRD (i.e. *Q^{H}y,* R). In this illustrations, y may be a set of receive symbols including 8 receive symbols, which may correspond to a received 8x8 MIMO communication signal, hence 8 MIMO layers. Accordingly, each node/branch generation resource 911, 921, 931, 941 may allocate 8 branch generation units ("branch instances"), in which each branch generation unit may perform calculations for a layer of the search tree (which may also correspond to a MIMO layer, i.e. a receive symbol). Each table instance 912, 922, 932, 942 may accordingly provide a soft output including calculated LLRs.

In various examples, the node/branch generation resources 911, 921, 931, 941 may include a plurality of processing units, and each processing unit may perform calculations for one or more layer of the search tree. In other words, each processing unit may perform calculations for one or more branch instances. In some examples, a processing unit may include multiple fractions, each allocated to perform calculations as a branch instance. Accordingly, the respective processing unit or respective fraction of a processing unit configured to perform likelihood calculations associated with the respective instance may be referred to as a resource element. As illustrated, each branch instance is associated with a resource allocated which is indicated as a percentage within each branch instance.

Each resource element may accordingly be configured to perform calculations for a particular portion of the search space associated with the search to be performed for the task. Considering the details of a tree search algorithm, some of which are provided with respect to FIG. 3, each resource element may be configured to perform calculations to obtain likelihood metrics for a subset of all possible candidate symbol values for one transmit symbol based on one receive symbol, which the subset may be based on the determined parameter, and also based on previous likelihood calculations for other transmit symbols. In some examples, a resource element may calculate likelihood metrics for the subset, and pass only selected candidate symbol values from the subset according to a respective configuring parameter (e.g. number K for K-best method), which the controller may have configured based on the determined parameter.

From a higher level, illustrations may collectively indicate a flexible pruning of branch trees to define the size of the search space (i.e. different pruning levels/degrees) based on the determined parameter. Accordingly, the determined parameter may also indicate how much resources are to be allocated for performing calculations for the respective search space, and the respective portion of the search space. Percentages provided for each branch instance within Figures may illustrate related usage for equalization/demodulation of a single set of layers based on the determined parameter for each branch instance on the pipeline. Each percentage may be quantified as the ratio of branch instance being used for each level, while non-used candidate symbols for likelihood metric calculations being in effect pruned off. It is to be noted that non-allocated resources for each branch instances may be allocated for equalization/demodulation of other sets of layers associated with other tasks. With combination of setting of the search space based on the determined parameter, and allocating resources according to the determined parameter, which may include a quasi-independent determination for each branch instance, may be based on the mapping information (e.g. a look up table) in the memory.

Each branch instance may include computing resources to perform calculations for a number of candidate symbol values from a set of all candidate symbol values for the respective transmit symbol. Furthermore, each branch instance may select a number of symbol values to be passed to a following branch instance, based on which the following branch instance may perform calculations. With the performed calculations of the last branch instance in the chain, a table instance may obtain accordingly a plurality of paths in the search tree, each path in the search tree representing a set of transmit symbols (i.e. a transmit symbol vector).

In this illustrative example, assuming determined parameters indicating a mode for the resources for an input task, and based on respective determined parameter, a percentage of a respective resource element is allocated for each branch instance to perform calculations for the respective layer, and a respective resource element is allocated for each table instance to maintain a number of calculated paths and perform LLR calculations.

FIG. 9A illustrates an allocation based on a first determined parameter representing a first mode configured to allocate fewest resources for each processing unit or a respective fraction of one or more processing units (which may be referred to as a "resource element") corresponding to the highest resource element throughput but the lowest demodulation performance among other modes, FIG. 9B illustrates an allocation based on a second determined parameter representing a second mode configured to allocate more resources than the first mode, but corresponding to a lower resource element throughput and a higher demodulation performance than the first mode, FIG. 9C illustrates an allocation based on a third determined parameter representing a third mode configured to allocate more resources than the second mode, but corresponding to a lower resource element throughput and a higher demodulation performance than the second mode, and FIG. 9D illustrates an allocation based on a fourth determined parameter representing a fourth mode configured allocate the most resources, but corresponding to the lowest resource element throughput and the highest demodulation performance among other nodes. A controller (e.g. the controller 611) may allocate resources for each resource element based on received parameter and a mode table stored in a memory (e.g. the memory 612), by which each resource element corresponding to one of the branch instances may be allocated quasi-independently.

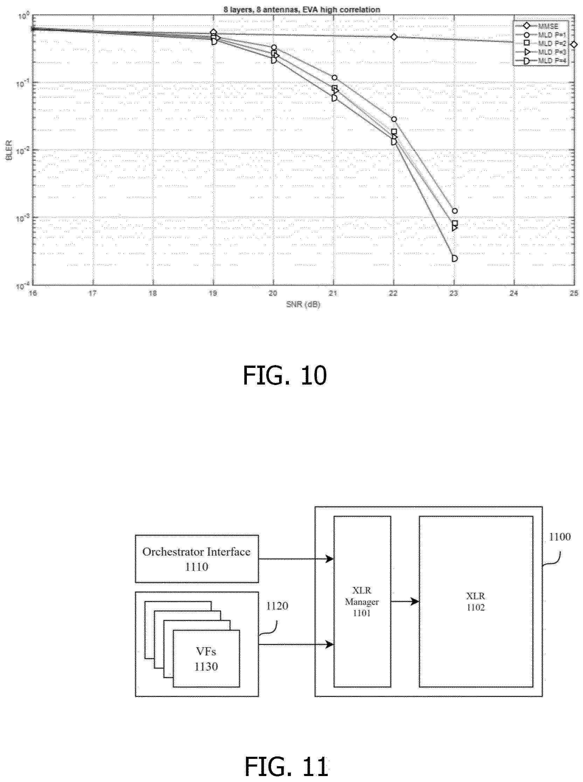

FIG. 10 shows a graph exemplarily illustrating communication performance vs processing performance corresponding to different determined parameters of a performed simulation. Horizontal axis is representative of block error rate, and vertical axis is representative of SNR in dB. Determined parameters may cause the computing resources to perform a search in different 4 modes which are provided in the graph as P=1, P=2, P=3, and P=4. Relative throughputs associated with each mode are provided in the table below. The graph further includes performance of an MMSE decoding.

| **P-mode** | **Relative Throughput** |
|---|---|
| 1 | 1.0 |
| 2 | 0.86 |
| 3 | 0.75 |
| 4 | 0.64 |

It is to be seen from the graph, that P=1 mode may have an optimal throughput metric (i.e. maximum capacity), but wireless performance of the P=1 mode is degraded by 0.5 dB compared to P=4 mode. Conversely P=4 mode may achieve optimal wireless performance but P=4 mode may need more computation resources to be allocated (i.e. capacity of respective processing units would be less than %36 from P=1 mode). Accordingly, P=2 or P=3 mode may be considered for certain tasks to find an optimal trade-off between P=1 and P=4, which may be used to speed up processing of some tasks at the cost of accepted wireless performance degradation. The granularity between modes may be defined based on use cases, and further nodes may be introduced to define more granularity.

FIG. 11 shows an exemplary illustration to configure a processing circuitry configured to provide a service in a mobile communication network. The processing circuitry 1100 (e.g. the processing circuitry 600) may include an accelerator 1102 (e.g. the accelerator 601) and an accelerator manager 1101 (e.g. the accelerator manager 602).

In various aspects, a device of a mobile communication network, which the device is communicatively coupled to various entities of the mobile communication network, may include the processing circuitry 1100. In a virtualized radio access network architecture, such as open radio access network architecture, the device may be configured to provide services to various entities that are service consumers of the mobile communication network, which the services may include processing/acceleration. The entities may include various virtual network functions, which may be implemented by the device itself, or any other devices within the mobile communication network that can communicate with the device over a designated interface. The device may include a processor that is configured to provide an interface between the processing circuitry 1100, or in particular between the accelerator manager 1101 and applications. The interface may include an acceleration abstraction layer (AAL). In such an example, the processing circuitry 1100 may include an AAL logical processing unit which may include the acceleration manager 1101.

In this illustrative example, the processing circuitry 1100 may receive configuration parameters (i.e. allocation information) via an orchestrator interface 1110 and a PHY layer (L1) interface 1120. In some examples, the device may include the orchestrator interface 1110 and the L1 interface 1120. For example, the device may include the L1 interface 1120, through which the device may provide data to the processing circuitry 1100 based on received L1 layer data provided by various VFs 1130 implemented by various devices within the mobile communication network. Accordingly, the device may receive symbol information and respective task information associated with received symbol information from multiple VFs. Corresponding VFs may receive tasks from a plurality of network access nodes, and accordingly each task may be associated with an uplink MIMO transmission received by a network access node from a UE. Similarly, the device may include the orchestrator interface 1110, through the device may provide data to the processing circuitry 1100 based on received information from an orchestrator entity (e.g. a service management and orchestration (SMO) of the mobile communication network) via an O1 or O2 communication interface.

By this illustrative deployment of the processing circuitry 1100, content as a service (CaaS) providers may configure the processing circuitry 1100 for a given deployment scenario based on various use cases, and they may create pods to process L1 workload into designated containers. Furthermore, RAN vendors may, through VFs and/or NFs, may interact with the processing circuitry 1100 over a designated interface to configure the processing circuitry 1100. Control of the operation with involvement of RAN vendors may provide a granular operation via provided tasks to the processing circuitry 1100. The device including the processing circuitry 1100 may expose configuration parameters to different vendors based on the use cases.

According to this deployment example, the processing circuitry 1100, or the device, may provide access to RAN vendors and CaaS for configuration modes of the processing circuitry 1100 to perform the search (e.g. the determined parameter, parameters associated with processing units, etc.). For this purpose, the processing circuitry 1100, or the device may encode information representing the actual configuration associated with the service.

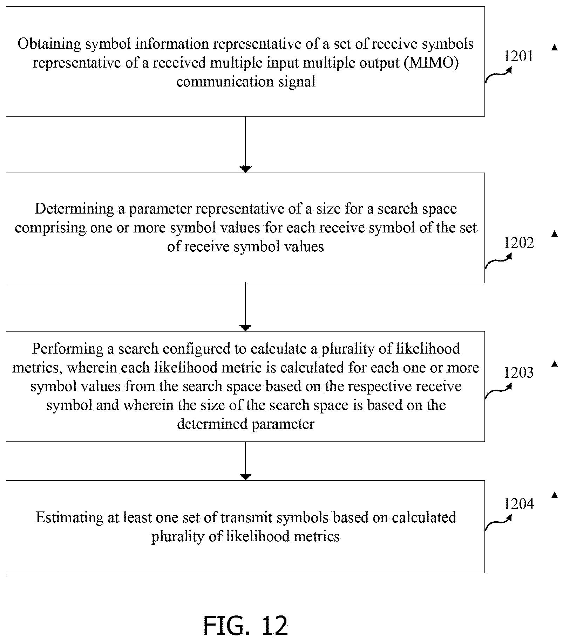

FIG. 12 shows an example of a method. The method that may include: obtaining 1201 symbol information representative of a set of receive symbols representative of a received multiple input multiple output (MIMO) communication signal; determining 1202 a parameter representative of a size for a search space may include one or more symbol values for each receive symbol of the set of receive symbol values; performing 1203 a search configured to calculate a plurality of likelihood metrics, wherein each likelihood metric is calculated for each one or more symbol values from the search space based on the respective receive symbol and wherein the size of the search space is based on the determined parameter; estimating 1204 at least one set of transmit symbols based on calculated plurality of likelihood metrics.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal that is "indicative of" or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor or 9. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more."

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D Points, among others, or any combination thereof. Registers, shift registers, processor registers, data buffers, among others, are also embraced herein by the term memory. The term "software" refers to any type of executable instruction, including firmware.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

The term "antenna", as used herein, may include any suitable configuration, structure and/or arrangement of one or more antenna elements, components, units, assemblies and/or arrays. The antenna may implement transmit and receive functionalities using separate transmit and receive antenna elements. The antenna may implement transmit and receive functionalities using common and/or integrated transmit/receive elements. The antenna may include, for example, a phased array antenna, a single element antenna, a set of switched beam antennas, and/or the like.

It will be understood that when an element is referred to as being "connected" or "coupled" to another element, it can be physically connected or coupled to the other element such that current and/or electromagnetic radiation (e.g., a signal) can flow along a conductive path formed by the elements. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), Spatial Divisional Multiple Access (SDMA), Time-Division Multiplexing (TDM), Time-Division Multiple Access (TDMA), Multi-User MIMO (MU-MIMO), General Packet Radio Service (GPRS), extended GPRS (EGPRS), Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth (BT), Global Positioning System (GPS), Wi-Fi, Wi-Max, ZigBeeTM, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other aspects may be used in various other devices, systems and/or networks.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN, and the like.

Some aspects may be used in conjunction with a wireless communication network communicating over a frequency band of 2.4GHz, 5GHz, and/or 6-7GHz. However, other aspects may be implemented utilizing any other suitable wireless communication frequency bands, for example, an Extremely High Frequency (EHF) band (the millimeter wave (mmWave) frequency band), e.g., a frequency band within the frequency band of between 20GHz and 300GHz, a WLAN frequency band, a WPAN frequency band, and the like.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. An apparatus (500) for a communication device (200) comprising:
a processing circuitry (501, 600) configured to:
obtain symbol information (631) representative of a set of receive symbols, wherein the set of receive symbols are representative of a received multiple input multiple output, MIMO, communication signal;
determine a parameter representative of a size for a search space, wherein the search space comprises one or more symbol values for each receive symbol of the set of receive symbol values;
perform a search configured to calculate a plurality of likelihood metrics, wherein each likelihood metric is calculated for each one or more symbol values from the search space based on the respective receive symbol and wherein the size of the search space is based on the parameter;
estimate at least one set of transmit symbols based on calculated plurality of likelihood metrics; and
a memory (502) to store the plurality of likelihood metrics,
**characterized in that**
the processing circuitry (501, 600) is further configured to determine the parameter based on obtained allocation information associated with the obtained symbol information (631),
wherein the obtained allocation information comprises a processing performance metric associated with computation resources used to perform one or more previous searches for one or more previously received MIMO communication signals respectively that are received via the MIMO communication channel used to receive the MIMO communication signal.

2. The apparatus (500) of claim 1,
wherein the search comprises a tree search according to one of a depth-first search, a breadth-first search, or a best-first search;
wherein the tree search is further configured to prune symbol values from a search space based on the parameter to obtain the search space.

3. The apparatus (500) of claim 1 or claim 2,
wherein the processing circuitry (501, 600) is configured to provide a soft output representative of the estimated at least one set of transmit symbols
wherein the provided soft output comprises log-likelihood ratios, LLRs, calculated for the estimated at least one set of transmit symbols based on the calculated plurality of likelihood metrics.

4. The apparatus (500) of any one of claims 1 to 3,
wherein the processing circuitry (501, 600) is configured to perform a suboptimal maximum likelihood estimation to estimate the at least one set of transmit symbols based on the performed search.

5. The apparatus (500) of claim 4,
wherein each calculated likelihood metric comprises a Euclidean distance;
wherein the processing circuitry (501, 600) is configured to determine the one or more symbol values for at least one of the receive symbols in the search space based on the parameter and previously calculated Euclidean distances for the search.

6. The apparatus (500) of any one of claims 1 to 5,
wherein the obtained allocation information comprises a communication performance metric associated with communication performance via the MIMO communication channel used to receive the MIMO communication signal.

7. The apparatus (500) of any one of claims 1 to 6,
wherein the obtained allocation information comprises information associated with a further communication device that has transmitted the received MIMO communication signal;
wherein the obtained allocation information comprises one or more attributes of a network slice associated with the further communication device.

8. The apparatus (500) of any one of claims 1 to 7,
wherein the obtained allocation information comprises a received priority parameter representative of an assigned priority for the obtained symbol information (631); or
wherein the obtained allocation information comprises a received preference information representative of a preference of an allocation performance associated with the obtained symbol information (631), wherein the received preference information comprises at least one of a use case classification associated with the mobile communication network, a QoS preference.

9. The apparatus (500) of any one of claims 1 to 8, further comprising:
a memory (502) configured to store task information for each task (633) of a plurality of tasks (633) in a task pool, each task being representative of a task (633) of an estimation of transmit symbols based on a provided symbol information (631) associated with the respective task (633);
wherein the processing circuitry (501, 600) is configured to obtain the symbol information (631) based on the task (633) received from the task pool;
wherein each task information comprises allocation information.

10. The apparatus (500) of claim 9,
wherein the processing circuitry (501, 600) is further configured to determine the parameter for the task (633) associated with the obtained symbol information (631) based on other tasks (633) of the plurality of tasks (633) in the task pool;
wherein the processing circuitry (501, 600) is further configured to determine the parameter for the obtained symbol information (631) based on at least one allocation information of at least one other task (633) in the task pool.

11. The apparatus (500) of claim 9 or 10,
wherein the processing circuitry (501, 600) is further configured to measure computing resources used to perform the task (633);
wherein the processing circuitry (501, 600) is further configured to estimate resources to perform the one or more tasks (633) in the task pool based on previously measured computing resources.

12. Non-transitory computer-readable medium comprising one or more instructions which, if executed by a processor, cause the processor to:
obtain symbol information (631) representative of a set of receive symbols representative of a received multiple input multiple output, MIMO, communication signal;
determine a parameter representative of a size for a search space comprising one or more symbol values for each receive symbol of the set of receive symbol values, wherein the parameter is determined based on obtained allocation information associated with the obtained symbol information, and wherein the obtained allocation information comprises a processing performance metric associated with computation resources used to perform one or more previous searches for one or more previously received MIMO communication signals respectively that are received via the MIMO communication channel used to receive the MIMO communication signal;
perform a search configured to calculate a plurality of likelihood metrics, wherein each likelihood metric is calculated for each one or more symbol values from the search space based on the respective receive symbol and wherein the size of the search space is based on the parameter;
estimate at least one set of transmit symbols based on calculated plurality of likelihood metrics.

13. Non-transitory computer-readable medium of claim 12,
wherein the search comprises a tree search according to one of a depth-first search, a breadth-first search, or a best-first search;
wherein the tree search is further configured to prune symbol values from a predefined search space based on the parameter to obtain the search space.

## Patentansprüche

1. Einrichtung (500) für eine Kommunikationsvorrichtung (200), umfassend:
eine Verarbeitungsschaltungsanordnung (501, 600), die konfiguriert ist zum:
Erhalten von Symbolinformationen (631), die einen Satz von Empfangssymbolen repräsentieren, wobei der Satz von Empfangssymbolen ein empfangenes Mehrfacheingabe-Mehrfachausgabe-Kommunikationssignal, MIMO-Kommunikationssignal, repräsentiert;
Ermitteln eines Parameters, der eine Größe für einen Suchraum repräsentiert, wobei der Suchraum einen oder mehrere Symbolwerte für jedes Empfangssymbol der Werte aus dem Satz von Empfangssymbolen umfasst;
Durchführen einer Suche, die konfiguriert ist, um eine Mehrzahl von Wahrscheinlichkeitsmetriken zu berechnen, wobei jede Wahrscheinlichkeitsmetrik für jeden des einen oder der mehreren Symbolwerte aus dem Suchraum basierend auf dem jeweiligen Empfangssymbol berechnet wird und wobei die Größe des Suchraums auf dem Parameter basiert ist;
Schätzen von mindestens einem Satz von Übertragungssymbolen basierend auf einer berechneten Mehrzahl von Wahrscheinlichkeitsmetriken; und
einen Speicher (502) zum Speichern der Mehrzahl von Wahrscheinlichkeitsmetriken,
**dadurch gekennzeichnet, dass**
die Verarbeitungsschaltungsanordnung (501, 600) ferner konfiguriert ist, um den Parameter basierend auf erhaltenen Zuweisungsinformationen zu ermitteln, die mit den erhaltenen Symbolinformationen (631) assoziiert sind,
wobei die erhaltenen Zuweisungsinformationen eine Verarbeitungsleistungsmetrik umfassen, die mit Computerressourcen assoziiert ist, die verwendet werden, um eine oder mehrere der vorherigen Suchen nach jeweils einem oder mehreren von zuvor empfangenen MIMO-Kommunikationssignalen durchzuführen, die über den MIMO-Kommunikationskanal empfangen wurden, der verwendet wird, um das MIMO-Kommunikationssignal zu empfangen.

2. Einrichtung (500) nach Anspruch 1,
wobei die Suche eine Baumsuche gemäß einer von einer Tiefensuche, einer Breitensuche oder einer Bestensuche umfasst;
wobei die Baumsuche ferner konfiguriert ist, um Symbolwerte aus einem Suchraum basierend auf dem Parameter zu beschneiden, um den Suchraum zu erhalten.

3. Einrichtung (500) nach Anspruch 1 oder 2,
wobei die Verarbeitungsschaltungsanordnung (501, 600) konfiguriert ist, um eine weiche Ausgabe bereitzustellen, die den geschätzten mindestens einen Satz von Übertragungssymbolen repräsentiert,
wobei die bereitgestellte weiche Ausgabe Protokoll-Wahrscheinlichkeit-Verhältnisse, LLRs, umfasst, die für den geschätzten mindestens einen Satz von Übertragungssymbolen basierend auf der berechneten Mehrzahl von Wahrscheinlichkeitsmetriken berechnet werden.

4. Einrichtung (500) nach einem der Ansprüche 1 bis 3, wobei die Verarbeitungsschaltungsanordnung (501, 600) konfiguriert ist, um eine suboptimale maximale Wahrscheinlichkeitsschätzung durchzuführen, um den mindestens einen Satz von Übertragungssymbolen basierend auf der durchgeführten Suche zu schätzen.

5. Einrichtung (500) nach Anspruch 4,
wobei jede berechnete Wahrscheinlichkeitsmetrik einen euklidischen Abstand umfasst;
wobei die Verarbeitungsschaltungsanordnung (501, 600) konfiguriert ist zum Ermitteln des einen oder der mehreren Symbolwerte für mindestens eines der Empfangssymbole in dem Suchraum basierend auf dem Parameter und den zuvor berechneten euklidischen Abständen für die Suche.

6. Einrichtung (500) nach einem der Ansprüche 1 bis 5, wobei die erhaltenen Zuweisungsinformationen eine Kommunikationsleistungsmetrik umfassen, die mit einer Kommunikationsleistung über den MIMO-Kommunikationskanal assoziiert ist, der zum Empfangen des MIMO-Kommunikationssignals verwendet wird.

7. Einrichtung (500) nach einem der Ansprüche 1 bis 6, wobei die erhaltenen Zuweisungsinformationen die Informationen umfassen, die mit einer weiteren Kommunikationsvorrichtung assoziiert sind, die das empfangene MIMO-Kommunikationssignal übertragen hat;
wobei die erhaltenen Zuweisungsinformationen ein oder mehrere Attribute eines Netzwerk-Slices umfassen, das mit der weiteren Kommunikationsvorrichtung assoziiert ist.

8. Einrichtung (500) nach einem der Ansprüche 1 bis 7, wobei die erhaltenen Zuweisungsinformationen einen empfangenen Prioritätsparameter umfassen, der eine zugeordnete Priorität für die erhaltenen Symbolinformationen repräsentiert (631); oder
wobei die erhaltenen Zuweisungsinformationen empfangene Präferenzinformationen umfassen, die eine Präferenz einer Zuweisungsleistung repräsentieren, die mit den erhaltenen Symbolinformationen assoziiert ist (631), wobei die empfangenen Präferenzinformationen mindestens eine von einer Anwendungsfallklassifizierung, die mit dem Mobilkommunikationsnetzwerk assoziiert ist, und einer QoS-Präferenz umfassen.

9. Einrichtung (500) nach einem der Ansprüche 1 bis 8, die ferner umfasst:
einen Speicher (502), der konfiguriert ist, um Aufgabeninformationen für jede Aufgabe (633) einer Mehrzahl von Aufgaben (633) in einem Aufgabenpool zu speichern, wobei jede Aufgabe eine Aufgabe (633) einer Schätzung von Übertragungssymbolen basierend auf bereitgestellten Symbolinformationen (631) repräsentiert, die mit der jeweiligen Aufgabe (633) assoziiert sind;
wobei die Verarbeitungsschaltungsanordnung (501, 600) konfiguriert ist, um die Symbolinformationen (631) basierend auf der Aufgabe (633) zu erhalten, die aus dem Aufgabenpool empfangen wird;
wobei alle Aufgabeninformationen Zuweisungsinformationen umfassen.

10. Einrichtung (500) nach Anspruch 9,
wobei die Verarbeitungsschaltungsanordnung (501, 600) ferner konfiguriert ist zum Ermitteln des Parameters für die Aufgabe (633), die mit den erhaltenen Symbolinformationen (631) assoziiert ist, basierend auf anderen Aufgaben (633) aus der Mehrzahl von Aufgaben (633) in dem Aufgabenpool;
wobei die Verarbeitungsschaltungsanordnung (501, 600) ferner konfiguriert ist zum Ermitteln des Parameters für die erhaltenen Symbolinformationen (631) basierend auf mindestens einer Zuweisungsinformation von mindestens einer anderen Aufgabe (633) in dem Aufgabenpool.

11. Einrichtung (500) nach Anspruch 9 oder 10,
wobei die Verarbeitungsschaltungsanordnung (501, 600) ferner konfiguriert ist zum Messen von Computerressourcen, die zum Durchführen der Aufgabe (633) verwendet werden;
wobei die Verarbeitungsschaltungsanordnung (501, 600) ferner konfiguriert ist, um die Ressourcen zum Durchführen der einen oder mehreren Aufgaben (633) in dem Aufgabenpool basierend auf den zuvor gemessenen Computerressourcen zu schätzen.

12. Nicht-flüchtiges computerlesbares Medium, das eine oder mehrere Anweisungen umfasst, die, wenn sie von einem Prozessor ausgeführt werden, den Prozessor veranlassen zum:
Erhalten von Symbolinformationen (631), die einen Satz von Empfangssymbolen eines empfangenes Mehrfacheingabe-Mehrfachausgabe-Kommunikationssignals, MIMO-Kommunikationssignal repräsentieren;
Ermitteln eines Parameters, der eine Größe für einen Suchraum repräsentiert, wobei der Suchraum einen oder mehrere Symbolwerte für jedes Empfangssymbol der Werte aus dem Satz von Empfangssymbolen umfasst, wobei der Parameter basierend auf erhaltenen Zuweisungsinformationen ermittelt wird, die mit den erhaltenen Symbolinformationen assoziiert sind, und wobei die erhaltenen Zuweisungsinformationen eine Verarbeitungsleistungsmetrik umfassen, die mit Computerressourcen assoziiert ist, die verwendet werden, um eine oder mehrere der vorherigen Suchen nach jeweils einem oder mehreren von zuvor empfangenen MIMO-Kommunikationssignalen durchzuführen, die über den MIMO-Kommunikationskanal empfangen wurden, der verwendet wird, um das MIMO-Kommunikationssignal zu empfangen.
Durchführen einer Suche, die konfiguriert ist, um eine Mehrzahl von Wahrscheinlichkeitsmetriken zu berechnen, wobei jede Wahrscheinlichkeitsmetrik für jeden des einen oder der mehreren Symbolwerte aus dem Suchraum basierend auf dem jeweiligen Empfangssymbol berechnet wird und wobei die Größe des Suchraums auf dem Parameter basiert ist;
Schätzen von mindestens einem Satz von Übertragungssymbolen basierend auf einer berechneten Mehrzahl von Wahrscheinlichkeitsmetriken.

13. Nicht-flüchtiges computerlesbares Medium nach Anspruch 12,
wobei die Suche eine Baumsuche gemäß einer von einer Tiefensuche, einer Breitensuche oder einer Bestensuche umfasst;
wobei die Baumsuche ferner konfiguriert ist, um Symbolwerte aus einem vordefinierten Suchraum basierend auf dem Parameter zu beschneiden, um den Suchraum zu erhalten.

## Revendications

1. Appareil (500) destiné à un dispositif de communication (200) comprenant :
des circuits de traitement (501, 600) configurés pour :
obtenir des informations de symboles (631) représentatives d'un ensemble de symboles de réception, l'ensemble de symboles de réception étant représentatifs d'un signal de communication à entrées multiples et sorties multiples, MIMO, reçu ;
déterminer un paramètre représentatif d'une taille pour un espace de recherche, l'espace de recherche comprenant une ou plusieurs valeurs de symboles pour chaque symbole de réception de l'ensemble de valeurs de symboles de réception ;
effectuer une recherche configurée pour calculer une pluralité de mesures de vraisemblance, chaque mesure de vraisemblance étant calculée pour chaque valeur ou plusieurs valeurs de symboles provenant de l'espace de recherche sur la base du symbole de réception respectif, et la taille de l'espace de recherche étant basée sur le paramètre ;
estimer au moins un ensemble de symboles de transmission sur la base d'une pluralité calculée de mesures de vraisemblance ; et
une mémoire (502) destinée à stocker la pluralité de mesures de vraisemblance,
**caractérisé en ce que**
les circuits de traitement (501, 600) sont en outre configurés pour déterminer le paramètre sur la base d'informations d'allocation obtenues associées aux informations de symboles obtenues (631),
où les informations d'allocation obtenues comprennent une métrique de performance de traitement associée à des ressources de calcul utilisées pour effectuer une ou plusieurs recherches précédentes pour un ou plusieurs signaux de communication MIMO reçus précédemment, respectivement, qui sont reçus par l'intermédiaire du canal de communication MIMO utilisé pour recevoir le signal de communication MIMO.

2. Appareil (500) selon la revendication 1,
dans lequel la recherche comprend une recherche arborescente selon l'une parmi une recherche en profondeur d'abord, une recherche en largeur d'abord ou une recherche du meilleur d'abord ;
dans lequel la recherche arborescente est en outre configurée pour élaguer des valeurs de symboles d'un espace de recherche sur la base du paramètre afin d'obtenir l'espace de recherche.

3. Appareil (500) selon la revendication 1 ou la revendication 2,
dans lequel les circuits de traitement (501, 600) sont configurés pour fournir une sortie logicielle représentative de l'au moins un ensemble estimé de symboles de transmission,
dans lequel la sortie logicielle fournie comprend des rapports logarithmiques de vraisemblance, LLR, calculés pour l'au moins un ensemble estimé de symboles de transmission sur la base de la pluralité calculée de métriques de vraisemblance.

4. Appareil (500) selon l'une quelconque des revendications 1 à 3,
dans lequel les circuits de traitement (501, 600) sont configurés pour effectuer une estimation de vraisemblance maximale sous-optimale afin d'estimer l'au moins un ensemble de symboles de transmission sur la base de la recherche effectuée.

5. Appareil (500) selon la revendication 4,
dans lequel chaque métrique de vraisemblance calculée comprend une distance euclidienne ;
dans lequel les circuits de traitement (501, 600) sont configurés pour déterminer les une ou plusieurs valeurs de symboles pour au moins l'un des symboles de réception dans l'espace de recherche sur la base du paramètre et des distances euclidiennes calculées précédemment pour la recherche.

6. Appareil (500) selon l'une quelconque des revendications 1 à 5,
dans lequel les informations d'allocation obtenues comprennent une métrique de performance de communication associée à la performance de communication par l'intermédiaire du canal de communication MIMO utilisé pour recevoir le signal de communication MIMO.

7. Appareil (500) selon l'une quelconque des revendications 1 à 6,
dans lequel les informations d'allocation obtenues comprennent des informations associées à un autre dispositif de communication ayant transmis le signal de communication MIMO reçu ;
dans lequel les informations d'allocation obtenues comprennent un ou plusieurs attributs d'une tranche de réseau associée à l'autre dispositif de communication.

8. Appareil (500) selon l'une quelconque des revendications 1 à 7,
dans lequel les informations d'attribution obtenues comprennent un paramètre de priorité reçu représentatif d'une priorité attribuée pour les informations de symbole obtenues (631) ; ou
dans lequel les informations d'attribution obtenues comprennent des informations de préférence reçues représentatives d'une préférence d'une performance d'attribution associée aux informations de symbole obtenues (631), les informations de préférence reçues comprenant au moins l'une parmi une classification de cas d'utilisation associée au réseau de communication mobile, et une préférence de QoS.

9. Appareil (500) selon l'une quelconque des revendications 1 à 8, comprenant en outre :
une mémoire (502) configurée pour stocker des informations de tâche pour chaque tâche (633) d'une pluralité de tâches (633) dans un groupe de tâches, chaque tâche étant représentative d'une tâche (633) d'une estimation de symboles de transmission sur la base d'informations de symboles fournies (631) associées à la tâche (633) respective ;
où les circuits de traitement (501, 600) sont configurés pour obtenir les informations de symboles (631) sur la base de la tâche (633) reçue du groupe de tâches ;
où chaque information de tâche comprend des informations d'allocation.

10. Appareil (500) selon la revendication 9,
dans lequel les circuits de traitement (501, 600) sont en outre configurés pour déterminer le paramètre pour la tâche (633) associée aux informations de symbole obtenues (631) sur la base d'autres tâches (633) de la pluralité de tâches (633) dans le groupe de tâches ;
dans lequel les circuits de traitement (501, 600) sont en outre configurés pour déterminer le paramètre pour les informations de symbole obtenues (631) sur la base d'au moins une information d'allocation d'au moins une autre tâche (633) dans le groupe de tâches.

11. Appareil (500) selon la revendication 9 ou la revendication 10,
dans lequel les circuits de traitement (501, 600) sont en outre configurés pour mesurer les ressources informatiques utilisées pour exécuter la tâche (633) ;
dans lequel les circuits de traitement (501, 600) sont en outre configurés pour estimer les ressources nécessaires à l'exécution des une ou plusieurs tâches (633) dans le groupe de tâches sur la base des ressources informatiques mesurées précédemment.

12. Support non transitoire lisible par ordinateur comprenant des instructions qui, si elles sont exécutées par un processeur, amènent le processeur à :
obtenir des informations de symboles (631) représentatives d'un ensemble de symboles de réception représentatifs d'un signal de communication à entrées multiples et sorties multiples, MIMO, reçu ;
déterminer un paramètre représentatif d'une taille pour un espace de recherche comprenant une ou plusieurs valeurs de symboles pour chaque symbole de réception de l'ensemble de valeurs de symboles de réception, le paramètre étant déterminé sur la base d'informations d'allocation obtenues associées aux informations de symboles obtenues, et où les informations d'allocation obtenues comprennent une métrique de performance de traitement associée à des ressources de calcul utilisées pour effectuer une ou plusieurs recherches antérieures d'un ou plusieurs signaux de communication MIMO précédemment reçus, respectivement, qui sont reçus par l'intermédiaire du canal de communication MIMO utilisé pour recevoir le signal de communication MIMO ;
effectuer une recherche configurée pour calculer une pluralité de mesures de vraisemblance, chaque mesure de vraisemblance étant calculée pour chaque valeur ou plusieurs valeurs de symboles provenant de l'espace de recherche sur la base du symbole de réception respectif, et la taille de l'espace de recherche étant basée sur le paramètre ;
estimer au moins un ensemble de symboles de transmission sur la base d'une pluralité calculée de mesures de vraisemblance.

13. Support non transitoire lisible par ordinateur selon la revendication 12,
dans lequel la recherche comprend une recherche arborescente selon l'une parmi une recherche en profondeur d'abord, une recherche en largeur d'abord ou une recherche du meilleur d'abord ;
dans lequel la recherche arborescente est en outre configurée pour élaguer des valeurs de symboles d'un espace de recherche prédéfini sur la base du paramètre afin d'obtenir l'espace de recherche.
